# EUROPEAN PATENT APPLICATION

(11) **EP 4 506 165 A1**
(43) Date of publication of application: **12.02.2025**
(21) Application number: 23775060.9
(22) Date of filing: 24.03.2023
(51) Int. Cl.: B32B 27/32, B32B 27/00, B32B 27/36, C08F 255/00, C09J 7/35, C09J 123/36, C09J 151/00

(54) **MULTILAYER BODY, METHOD FOR PRODUCING MULTILAYER BODY AND ADHESIVE COMPOSITION**

(30) Priority: 25.03.2022 JP 2022049877; 25.03.2022 JP 2022049878
(71) Applicant: Mitsui Chemicals, Inc., Tokyo 104-0028 (JP)
(72) Inventor: ICHIKAWA Tatsuya, Sodegaura-shi, Chiba 299-0265 (JP); MIZOBUCHI Yusuke, Sodegaura-shi, Chiba 299-0265 (JP); GOTO Yuuya, Sodegaura-shi, Chiba 299-0265 (JP); HARADA Katsuyoshi, Sodegaura-shi, Chiba 299-0265 (JP)
(74) Representative: Hoffmann Eitle
(86) International application number: PCT/JP2023/011677
(87) International publication number: WO 2023/182467

(57) **Abstract**

One embodiment of the present invention relates to a laminate, a method for producing a laminate, or an adhesive composition, the laminate has a layer (A) including polyethylene terephthalate or a biodegradable polymer and an adhesive layer (B) including an adhesive composition, at least a part of the adhesive layer (B) is in contact with the layer (A), the adhesive composition contains a graft-modified product of at least one base polymer selected from polyolefins by a carbodiimide monomer having a carbodiimide group and a polymerizable double bond and contains 0.1 to 50 mmol of the carbodiimide group per 100 g of the adhesive composition, and the density of the adhesive composition is 0.870 to 0.940 g/cm³.

## Description

### Technical Field

One embodiment of the present invention relates to a laminate, a method for producing a laminate, and an adhesive composition.

### Background Art

Polyolefins such as polyethylene and polypropylene are excellent in, for example, mechanical strength, rigidity, heat resistance, chemical resistance, oil resistance, transparency, and low-temperature impact resistance, and are widely used as packaging materials and coating materials for, for example, films, sheets, and bottles, or as decorative materials for, for example, wallpaper, taking advantage of these properties.

However, polyolefins have no polar groups in the molecule and thus have poor adhesiveness to polar resins such as polyesters and have limitations on being used as laminates with these materials.

In order to solve these problems, a method of grafting a polar group-containing monomer to a polyolefin to improve the compatibility and adhesiveness has been widely used. For example, a method of grafting, for example, glycidyl (meth)acrylate to a polyolefin is generally and widely used (for example, Patent Literature 1).

In addition, recently, due to environmental consideration, techniques of replacing petroleum raw materials, for example, petroleum-derived resins with biodegradable polymers causing less environmental impact have been attracting attention. However, biodegradable polymers generally have a defect of various poor properties, for example, heat resistance, or a defect of a low adhesive strength to conventional adhesive resin compositions compared with petroleum-derived resins.

### Citation List

### Patent Literature

Patent Literature 1: JP H06-145260 A

### Summary of Invention

Modified polyolefins that are obtained by, for example, the method described in Patent Literature 1 have adhesiveness that can be improved to some extent, but the adhesiveness is not sufficient, in particular, the adhesive strength is not sufficient, or high temperatures above a certain level are required to develop a sufficient adhesive strength.

One embodiment of the present invention provides an adhesive composition capable of strongly adhering to a layer containing polyethylene terephthalate, which is a resin having a polar group, or a biodegradable polymer, even at a low temperature; a laminate comprising the adhesive composition and having an excellent adhesive strength; and a method for producing the same.

### Solution to Problem

Configuration examples of the present invention are as follows:
[1] A laminate comprising: a layer (A) comprising polyethylene terephthalate or a biodegradable polymer; and an adhesive layer (B) comprising an adhesive composition,
   wherein at least a part of the adhesive layer (B) is in contact with the layer (A), and
   the adhesive composition satisfies the following requirements (i) to (iii):
      (i) a graft-modified product of at least one base polymer selected from polyolefins by a carbodiimide monomer having a carbodiimide group and a polymerizable double bond is contained;
      (ii) 0.1 to 50 mmol of the carbodiimide group is contained per 100 g of the adhesive composition; and
      (iii) a density is 0.870 to 0.940 g/cm³.
[2] The laminate according to [1], wherein the carbodiimide monomer is at least one monomer selected from the group consisting of a compound represented by the following formula (1) and a compound represented by the following formula (2), 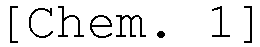 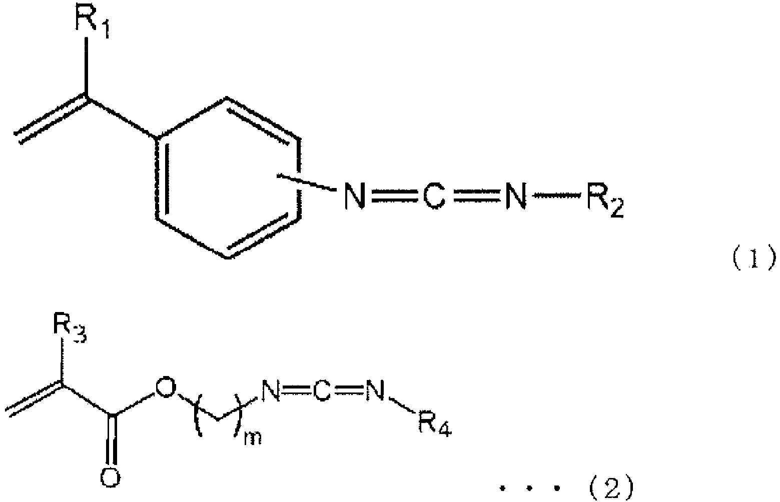 wherein in the formula (1), R₁ is a hydrogen atom or a methyl group, and R₂ is an alkyl group or aryl group optionally having a substituent, and
   in the formula (2), R₃ is a hydrogen atom or a methyl group, R₄ is an alkyl group or aryl group optionally having a substituent, and m is an integer of 2 or more.
[3] The laminate according to [1] or [2], wherein the layer (A) consists of polyethylene terephthalate.
[4] The laminate according to [1] or [2], wherein the layer (A) comprises polylactic acid.
[5] The laminate according to [1] or [2], wherein the layer (A) consists of a biodegradable polymer.
[6] The laminate according to [1] or [2], wherein the layer (A) consists of polylactic acid.
[7] The laminate according to any one of [1] to [6] obtained by laminate molding, co-extrusion molding, blow molding, or co-injection molding.
[8] A method for producing a laminate,
   wherein the laminate is a laminate having a layer (A) comprising polyethylene terephthalate or a biodegradable polymer and an adhesive layer (B) comprising an adhesive composition, at least a part of the adhesive layer (B) is in contact with the layer (A),
   the production method comprises a step 1 of performing co-extrusion molding, laminate molding, blow molding, or co-injection molding on a resin composition comprising polyethylene terephthalate or a biodegradable polymer and the adhesive composition, and
   the adhesive composition satisfies the following requirements (i) to (iii):
      (i) a graft-modified product of at least one base polymer selected from polyolefins by a carbodiimide monomer having a carbodiimide group and a polymerizable double bond is contained;
      (ii) 0.1 to 50 mmol of the carbodiimide group is contained per 100 g of the adhesive composition; and
      (iii) a density is 0.870 to 0.940 g/cm³.
[9] The method for producing a laminate according to [8], wherein, when the layer (A) is a layer comprising a biodegradable polymer,
   the step 1 is performed at a temperature that is lower than a pyrolysis temperature of the biodegradable polymer.
[10] The method for producing a laminate according to [8] or [9], wherein the carbodiimide monomer is at least one monomer selected from the group consisting of a compound represented by the following formula (1) and a compound represented by the following formula (2), 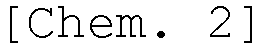 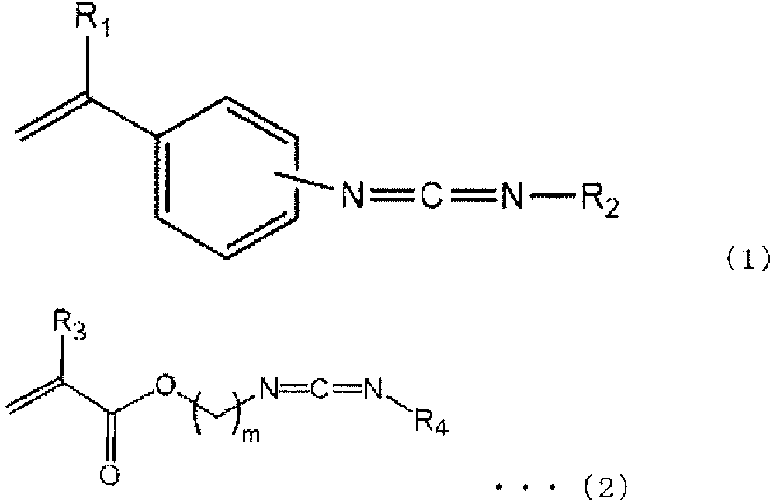 wherein in the formula (1), R₁ is a hydrogen atom or a methyl group, and R₂ is an alkyl group or aryl group optionally having a substituent, and
   in the formula (2), R₃ is a hydrogen atom or a methyl group, R₄ is an alkyl group or aryl group optionally having a substituent, and m is an integer of 2 or more.
[11] An adhesive composition satisfying the following requirements (i) to (iii):
   (i) a graft-modified product of at least one base polymer selected from polyolefins by a carbodiimide monomer having a carbodiimide group and a polymerizable double bond is contained;
   (ii) 0.1 to 50 mmol of the carbodiimide group is contained per 100 g of the adhesive composition; and
   (iii) a density is 0.870 to 0.940 g/cm³.
[12] The adhesive composition according to [11], wherein the carbodiimide monomer is at least one monomer selected from the group consisting of a compound represented by the following formula (1) and a compound represented by the following formula (2), 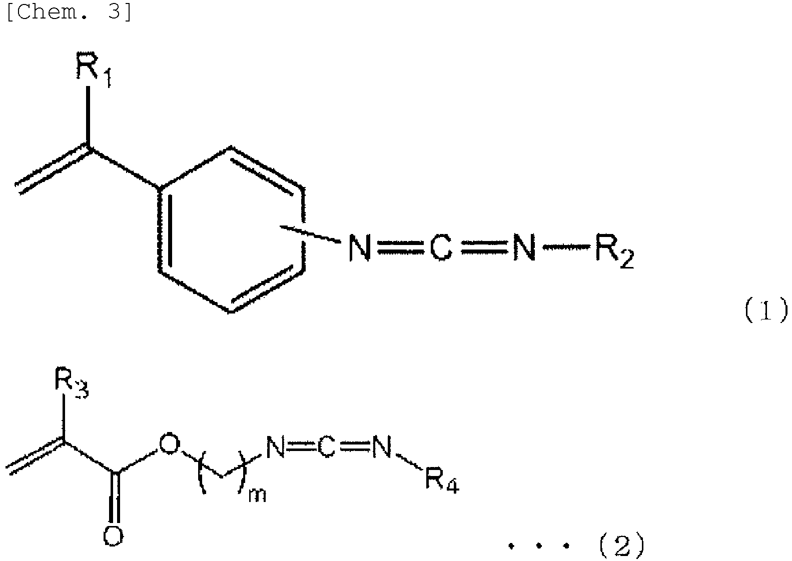 wherein in the formula (1), R₁ is a hydrogen atom or a methyl group, and R₂ is an alkyl group or aryl group optionally having a substituent, and
   in the formula (2), R₃ is a hydrogen atom or a methyl group, R₄ is an alkyl group or aryl group optionally having a substituent, and m is an integer of 2 or more.

### Advantageous Effect of Invention

According to one embodiment of the present invention, it is possible to provide an adhesive composition capable of strongly adhering to a layer containing polyethylene terephthalate, which is a resin having a polar group, even at a low temperature (for example, 230°C); a laminate comprising the adhesive composition and having an excellent adhesive strength; and a method for producing the same.

In addition, according to one embodiment of the present invention, it is possible to provide an adhesive composition capable of strongly adhering to a layer containing a biodegradable polymer even in the case of adhering at a low temperature at which the biodegradable polymer does not pyrolyzes; a laminate comprising the adhesive composition and having an excellent adhesive strength; and a method for producing the same.

### Description of Embodiments

### <<Adhesive compositions

An adhesive composition according to one embodiment of the present invention (hereinafter, also referred to as "the present composition") satisfies the following requirements (i) to (iii).
(i) A graft-modified product of at least one base polymer selected from polyolefins by a carbodiimide monomer having a carbodiimide group and a polymerizable double bond (hereinafter, also referred to as "the present modified product") is contained.
(ii) 0.1 to 50 mmol of the carbodiimide group is contained per 100 g of the present composition.
(iii) The density is 0.870 to 0.940 g/cm³.

The amount of the carbodiimide group in the present composition is 0.1 to 50 mmol, preferably 0.2 to 20 mmol, and more preferably 0.5 to 5 mmol per 100 g of the present composition.

When the amount of the carbodiimide group is within the above range, it is possible to easily obtain the present composition capable of strongly adhering to an adherend, in particular, a layer containing polyethylene terephthalate or a biodegradable polymer even in the case of adhering thereto at a low temperature.

Specifically, the amount of the carbodiimide group is measured by a method described in Examples below.

The density of the present composition measured according to JIS K 7210 is 0.870 to 0.940 g/cm³, preferably 0.880 to 0.925 g/cm³, and more preferably 0.890 to 0.920 g/cm³.

When the density is within the above range, it is possible to easily obtain the present composition capable of strongly adhering to an adherend, in particular, a layer containing polyethylene terephthalate or a biodegradable polymer even in the case of adhering thereto at a low temperature.

The melt flow rate (MFR) of the present composition measured at 190°C and 2.16 kg load according to JIS K 7210 is preferably 0.1 to 10 g/10 minutes, and more preferably 0.2 to 5 g/10 minutes.

When the MFR is within the above range, it is possible to easily form a desired laminate by a molding method such as co-extrusion molding, laminate molding, blow molding, or co-injection molding, which is preferable.

The present composition is not particularly limited as long as the present composition comprises the present modified product, and may consist only of the present modified product.

The present composition comprises the present modified product and is thus capable of forming a layer having a high adhesive strength within a short period of time on an adherend, in particular, a layer comprising a biodegradable polymer or a layer having a polar group, for example, a polyester (in particular, a layer comprising polyethylene terephthalate).

The present modified product is highly reactive with polar groups that are present in, for example, polyethylene terephthalate and biodegradable polymers compared with graft-modified products by glycidyl (meth)acrylate, and the present composition containing the present modified product is significantly excellent in adhesiveness to layers containing polyethylene terephthalate or a biodegradable polymer.

The present modified product is not a block copolymer or a random copolymer of an olefin monomer such as ethylene or propylene and the carbodiimide monomer but a graft-modified product, and the use of the present modified product thus makes the present composition exhibit the above effects.

The kind of the present modified products that are used in the present composition may be one or more.

The content of the present modified product in the present composition is not particularly limited, but is usually 0.5% by mass or more, preferably 1% by mass or more, and usually 60% by mass or less, preferably 50% by mass or less, from the viewpoint of, for example, molding processability and controllability of adhesive ability, and economic efficiency.

The present composition preferably comprises the present modified product and one or more olefin polymers other than the present modified product.

The olefin polymer that may be used in the present composition is not particularly limited as long as it is a polymer containing an olefin as a raw material, and various known olefin polymers can be used. Specific examples thereof include homopolymers or copolymers of α-olefins such as ethylene, propylene, 1-butene, 1-hexene, 4-methyl-1-pentene, and 1-octene (for example: high-pressure low-density polyethylene, linear low-density polyethylene (LLDPE), medium-density polyethylene, high-density polyethylene, polypropylene, poly-1-butene, poly-4-methyl-1-pentene, low-crystalline or amorphous ethylene-propylene random copolymers, ethylene-1-butene random copolymers, and propylene-1-butene random copolymers), ethylene-vinyl acetate copolymers (EVA) or saponified products thereof, ethylene-(meth)acrylic acid copolymers or metal salts (ionomers) thereof, ethylene-cyclic olefin copolymers, and polymers obtained by graft-modifying these (co)polymers with a polar compound such as maleic acid or a silane compound.

When the present composition contains a certain present modified product, as the olefin polymer, among these, the same polymer as the base polymer used for the synthesis of the present modified product is preferable, from the viewpoint of, for example, making it possible to easily obtain the present composition having excellent compatibility and further exhibiting a desired effect.

The raw material (for example, olefin) of the olefin polymer may be a polymer for which only a biomass-derived raw material is used, a polymer for which only a fossil fuel-derived raw material is used, or a polymer for which both a biomass-derived raw material and a fossil fuel-derived raw material are used.

The olefin polymer is preferably a polymer for which a biomass-derived raw material is used, from the viewpoint of environmental impact reduction (mainly greenhouse gas reduction).

In the present specification, the biomass-derived raw material is a raw material for which, for example, any plant-derived or animal-derived (renewable) natural raw material, including a fungus, a yeast, algae, and a bacterium, or a residue thereof, is used as a raw material, and examples thereof include raw materials containing, as carbon, a ¹⁴C isotope in a proportion of about 1 × 10⁻¹² and having a biomass carbon concentration (unit: pMC) measured according to ASTM D 6866 of about 100 pMC. The biomass-derived raw material can be obtained by, for example, a conventionally known method.

For certain polymers, as long as the production conditions of the polymers, for example, the catalyst for polymerization, the polymerization process, and the polymerization temperature are the same, the molecular structures of polymers containing the biomass-derived raw material are the same as those of polymers composed of a fossil fuel-derived raw material, except that the ¹⁴C isotope is contained in a proportion of about 1 × 10⁻¹² to 10⁻¹⁴. Therefore, it is considered that performance does not vary between polymers containing the biomass-derived raw material and polymers composed of a fossil fuel-derived raw material.

When the present composition contains the olefin polymer, the content of the olefin polymer in the present composition is not particularly limited, but is usually 40% by mass or more, preferably 50% by mass or more, and usually 99.5% by mass or less, preferably 99% by mass or less, from the viewpoint of, for example, molding processability and controllability of adhesive ability, and economic efficiency.

Various additives other than the present modified product and the olefin polymer may be added to the present composition as required to an extent that the object of the present invention is not impaired.

Examples of the additive include a softener, a stabilizer, a filler, an antioxidant, a crystal nucleating agent, a wax, a thickener, a mechanical stability-imparting agent, a leveling agent, a wetting agent, a film-forming aid, a crosslinking agent, a preservative, a rust inhibitor, a pigment, a dispersant, an antifreezing agent, an antifoaming agent, a tackifier, another thermoplastic polymer, water, and an organic solvent, and each of these may be used alone or two or more.

The additive may be an additive for which only a biomass-derived raw material is used as a raw material thereof, an additive for which only a fossil fuel-derived raw material is used, or an additive for which both a biomass-derived raw material and a fossil fuel-derived raw material are used.

The present composition can be used in various known forms of adhesives, for example, as an aqueous dispersion type adhesive, an organic solvent type adhesive, and a hot melt type adhesive.

Examples of the object to which the present composition adheres include layers comprising or consisting of: metal; glass; wood; paper; cloth; a thermoplastic resin such as polyester, polyphenylene sulfide, polyamide, polyacetal, polycarbonate, poly(meth)acrylate, an olefin polymer, polystyrene, rubber, a modified fluororesin, a biomass plastic, a biodegradable polymer, or an engineering plastic other than these; or a thermosetting resin.

Among these, the present composition has excellent adhesiveness to layers comprising a biodegradable polymer and layers comprising polyethylene terephthalate (in particular, layers consisting of polyethylene terephthalate) and is thus preferably used as an adhesive to these layers, from the viewpoint of, for example, the effect of the present invention being further exhibited.

### <Present modified product>

The present modified product is a graft-modified product of at least one base polymer selected from polyolefins by a carbodiimide monomer having a carbodiimide group and a polymerizable double bond, in other words, a graft-modified product in which at least one base polymer selected from polyolefins is graft-modified with a carbodiimide monomer having a carbodiimide group and a polymerizable double bond. In addition, it can also be said that the present modified product is a graft-modified product containing at least one base polymer moiety selected from polyolefins and a graft moiety derived from a carbodiimide monomer having a carbodiimide group and a polymerizable double bond.

The graft ratio in the present modified product is preferably 0.3% by mass or more, more preferably 0.5% by mass or more and preferably 8% by mass or less, more preferably 5% by mass or less, from the viewpoint of the facts that the present modified product can be easily synthesized, a graft-modified product having more excellent adhesiveness can be easily obtained, and the obtained graft-modified product does not become too hard.

The graft ratio is the mass of the structure derived from the carbodiimide monomer in the graft-modified product and can be determined by ¹H-NMR measurement, specifically by the method described in Examples below.

### [Carbodiimide monomer]

The carbodiimide monomer used for graft-modifying the base polymer is not particularly limited as long as it is a compound having a carbodiimide group and a polymerizable double bond, but is preferably a compound represented by the following formula (1) or (2), from the viewpoint of, for example, further exhibiting the effects of the present invention.

Two or more carbodiimide monomers may be used for graft-modification of the base polymer, but usually one carbodiimide monomer is used.

The carbodiimide monomer may be a biomass-derived monomer, may be a fossil fuel-derived monomer, or may be a monomer derived from biomass and a fossil fuel.

The carbodiimide monomer is preferably a biomass-derived monomer or a monomer derived from biomass and a fossil fuel, from the viewpoint of environmental impact reduction (mainly greenhouse gas reduction).

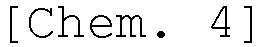

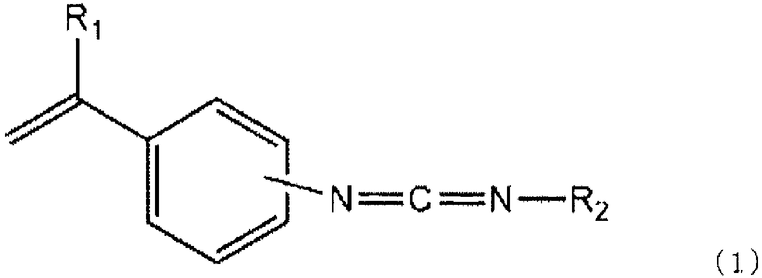

In the formula (1), R₁ is a hydrogen atom or a methyl group, and is preferably a hydrogen atom, from the viewpoint of, for example, easily obtaining the present modified product having a high graft ratio.

In the formula (1), R₂ is an alkyl group or aryl group optionally having a substituent. The alkyl group optionally having a substituent may be chain-like (may be linear or branched) or may include an alicyclic ring.

The number of carbon atoms of the alkyl group optionally having a substituent is preferably 1 or more, and more preferably 3 or more, and is preferably 20 or less, more preferably 12 or less, and still more preferably 8 or less. In addition, the number of carbon atoms of the aryl group optionally having a substituent is preferably 5 or more, and more preferably 6 or more, and is preferably 20 or less, more preferably 12 or less, and still more preferably 8 or less.

Examples of the substituent which the alkyl group and the aryl group may have include a halogen atom, a hydrocarbon group having 1 to 8 carbon atoms, an alkoxy group having 1 to 8 carbon atoms, a carboxylic acid ester group having 1 to 8 carbon atoms, a sulfonic acid ester group having 1 to 8 carbon atoms, a carbonyl group having 1 to 8 carbon atoms, an amide group having 1 to 8 carbon atoms, an amino group having 1 to 8 carbon atoms, a sulfide group having 1 to 8 carbon atoms, a phosphoric acid ester group having 1 to 8 carbon atoms, an alkylsilyl group having 1 to 8 carbon atoms, and an alkoxysilyl group having 1 to 8 carbon atoms.

Among these, the R₂ is preferably an alicyclic ring-containing aliphatic hydrocarbon group having 4 to 20 carbon atoms, and more preferably an alicyclic hydrocarbon group having 5 to 7 carbon atoms, from the viewpoint of, for example, the solubility of the carbodiimide monomer, the availability thereof, and the ease of purification of the resulting graft-modified product.

Examples of the alicyclic ring include a cyclobutyl ring, a cyclopentyl ring, a cyclohexyl ring, a cycloheptyl ring, and these rings having a hydrocarbon group. Further, the alicyclic ring may be a polycyclic ring such as an adamantyl ring and a methyladamantyl ring.

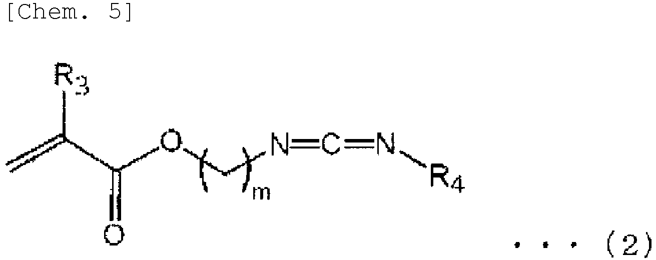

In the formula (2), R₃ is a hydrogen atom or a methyl group, and is preferably a methyl group, from the viewpoint of, for example, easily obtaining the present composition having an excellent adhesive strength to base materials having a polar group.

In the formula (2), R₄ is an alkyl group or aryl group optionally having a substituent. The alkyl group optionally having a substituent may be chain-like (may be linear or branched) or may include an alicyclic ring.

The number of carbon atoms of the alkyl group optionally having a substituent is preferably 1 or more, and more preferably 3 or more, and is preferably 20 or less, more preferably 12 or less, and still more preferably 8 or less. In addition, the number of carbon atoms of the aryl group optionally having a substituent is preferably 5 or more, and more preferably 6 or more, and is preferably 20 or less, more preferably 12 or less, and still more preferably 8 or less.

Examples of the alicyclic ring include a cyclobutyl ring, a cyclopentyl ring, a cyclohexyl ring, a cycloheptyl ring, and these rings having a hydrocarbon group. Further, the alicyclic ring may be a polycyclic ring such as an adamantyl ring and a methyladamantyl ring.

Examples of the substituent which the alkyl group and the aryl group may have include a halogen atom, a hydrocarbon group having 1 to 8 carbon atoms, an alkoxy group having 1 to 8 carbon atoms, a carboxylic acid ester group having 1 to 8 carbon atoms, a sulfonic acid ester group having 1 to 8 carbon atoms, a carbonyl group having 1 to 8 carbon atoms, an amide group having 1 to 8 carbon atoms, an amino group having 1 to 8 carbon atoms, a sulfide group having 1 to 8 carbon atoms, a phosphoric acid ester group having 1 to 8 carbon atoms, an alkylsilyl group having 1 to 8 carbon atoms, and an alkoxysilyl group having 1 to 8 carbon atoms.

Among these, the R₄ is preferably a non-branched and ring-free alkyl group, more preferably a non-branched and ring-free alkyl group having 3 to 7 carbon atoms, from the viewpoint of, for example, easily obtaining the present composition having an excellent adhesive strength to layers containing polyethylene terephthalate.

In addition, the R₄ is preferably a branched and ring-free alkyl group, more preferably a branched and ring-free alkyl group having 3 to 7 carbon atoms, from the viewpoint of, for example, the stability of the carbodiimide group improving in the air and during heating, the yield increasing during the synthesis of the present modified product, and the reduction of the production cost, and from the viewpoint of, for example, easily obtaining the present composition having an excellent adhesive strength to layers containing a biodegradable polymer.

When R₄ is ring-free, steric hindrance attributed to a ring structure is suppressed, and the reactivity of the carbodiimide group becomes favorable.

Suitable examples of the non-branched and ring-free alkyl group include a n-propyl group, a n-butyl group, a n-pentyl group, a n-hexyl group, a n-heptyl group, a n-octyl group, and a n-nonyl group.

Suitable examples of the branched and ring-free alkyl group include an isopropyl group, a sec-butyl group, an isobutyl group, a tert-butyl group, a 1-methylbutyl group, a 1,2-dimethylpropyl group, a 2-methylbutyl group, a 3-methylbutyl group, a 1-ethylpropyl group, a 1,1-dimethylpropyl group, a 2,2-dimethylpropyl group, a 1-methylpentyl group, a 1,2-dimethylbutyl group, a 1,3-dimethylbutyl group, a 1,2,2-trimethylpropyl group, a 2-methylpentyl group, a 2,2-dimethylbutyl group, a 2,3-dimethylbutyl group, a 2-ethylbutyl group, a 3-methylpentyl group, a 3,3-dimethylbutyl group, a 4-methylpentyl group, a 1-ethyl-2-methylpropyl group, a 1-ethylbutyl group, a 1,1-dimethylbutyl group, a 1,1,2-trimethylpropyl group, a 1-ethyl-1-methylpropyl group, a 1-methylhexyl group, a 1,2-dimethylpentyl group, a 1,3-dimethylpentyl group, a 1,4-dimethylpentyl group, a 1,2,3-trimethylbutyl group, a 1,2,2-trimethylbutyl group, a 1,3,3-trimethylbutyl group, a 2-methylhexyl group, a 2,3-dimethylpentyl group, a 2,4-dimethylpentyl group, a 2,3,3-trimethylbutyl group, a 1,1-dimethylpentyl group, a 1,1,2-trimethylbutyl group, a 1,1,3-trimethylbutyl group, a 1,1,2,2-tetramethylpropyl group, a 2,2-dimethylpentyl group, a 2,2,3-trimethylbutyl group, a 3-methylhexyl group, a 3,4-dimethylpentyl group, a 3,3-dimethylpentyl group, a 1-ethylpentyl group, a 1-ethyl-2-methylbutyl group, a 1-ethyl-3-methylbutyl group, a 1-ethyl-2,2-dimethylpropyl group, a 2-ethylpentyl group, a 2-ethyl-3-methylbutyl group, a 1-ethyl-1-methylbutyl group, a 1-ethyl-1,2-dimethylpropyl group, a 3-ethylpentyl group, a 1,1-diethylpropyl group, a 2,2-diethylpropyl group, a 1-propylbutyl group, a diisopropylmethyl group, and a 1-isopropylbutyl group.

In formula (2), m is an integer of 2 or more, and is preferably an integer of 2 to 6, more preferably an integer of 2 to 4, and particularly preferably 2, from the viewpoint of, for example, the solubility of the carbodiimide monomer, the availability thereof, and the ease of purification of the resulting graft-modified product.

### [Base polymer]

The base polymer before being graft-modified with the carbodiimide monomer is at least one polymer selected from polyolefins.

Specific examples of the olefin include ethylene, propylene, 1-butene, 1-pentene, 1-hexene, 1-octene, 1-decene, and 4-methyl-1-pentene.

The polyolefin may be a homopolymer of any of these olefins, a copolymer of two or more of these olefins, or a copolymer of one or more of these olefins and one or more of the following comonomers. Among these, the polyolefin is preferably at least one polymer selected from an ethylene polymer, a propylene polymer, and a butene polymer. The polyolefin is more preferably at least one polymer selected from an ethylene polymer and a propylene polymer, from the viewpoint of, for example, excellent separability from impurities after the graft reaction, and, in the case of using a solvent in the graft reaction, excellent solubility in the solvent.

Two or more of the base polymers may be used in the present modified product, but usually one is used.

The base polymer is preferably a polymer being free of at least one active hydrogen-containing group selected from a carboxy group, an acid anhydride group, an amino group, a hydroxy group, and a thiol group, from the viewpoint of, for example, further exhibiting the effects of the present invention.

Further, the base polymer is also preferably a polymer being free of a group that is easily converted into a group having active hydrogen by, for example, water, such as a carboxylic acid derivative group such as acid halide, amide, imide, or ester, or an epoxy group, from the viewpoint of, for example, further exhibiting the effects of the present invention.

The weight average molecular weight (Mw) of the base polymer is not particularly limited, but is preferably 100,000 or more, more preferably 150,000 or more, and preferably 1,000,000 or less, more preferably 700,000 or less, from the viewpoint of, for example, the ease of synthesis of the present modified product.

The number-average molecular weight (Mn) of the base polymer is also not particularly limited, but is preferably 40,000 or more, more preferably 50,000 or more, and preferably 500,000 or less, more preferably 300,000 or less, from the same reason.

The molecular weight distribution (Mw/Mn) of the base polymer is also not particularly limited, but is preferably 1.5 or more, more preferably 2.0 or more, and is preferably 6.0 or less, more preferably 5.0 or less.

The Mw and Mn are values measured under the following conditions using HLC-8321 GPC/HT type gel permeation chromatograph (GPC) manufactured by Tosoh Corporation.
Separation column: TSKgel GMH₆-HT (two columns) and TSKgel GMH₆-HTL (two columns) (both 7.5 mm I.D. × 30 cm, manufactured by Tosoh Corporation)
Column temperature: 140°C
Mobile phase: o-dichlorobenzene (containing 0.025% dibutylhydroxytoluene (BHT))
Developing rate: 1.0 mL/min
Sample concentration: 0.1% (w/v)
Sample injection volume: 0.4 mL
Detector: Differential refractometer
Calibration of apparatus: Calibrated using monodispersed polystyrene (manufactured by Tosoh Corporation, #3std set)

The base polymer can be synthesized by a conventionally known method, or a commercially available product may be used.

The conventionally known method is not particularly limited, and examples thereof include a method using a coordination polymerization catalyst system containing a transition metal. Specific examples thereof include a method in which an olefin such as ethylene or propylene and, as necessary, the following comonomer are (co)polymerized in the presence of a catalyst such as a magnesium chloride-supported titanium catalyst, a vanadium catalyst containing a soluble vanadium compound and an alkylaluminum halide compound, or a metallocene catalyst containing a metallocene compound and an organoaluminumoxy compound.

As the raw material (for example, the olefin or the monomer such as the following comonomer) of the base polymer, only a biomass-derived raw material may be used, only a fossil fuel-derived raw material may be used, or both a biomass-derived raw material and a fossil fuel-derived raw material may be used.

The base polymer is preferably a polymer for which a biomass-derived raw material is used, from the viewpoint of environmental impact reduction (mainly greenhouse gas reduction).

### [Ethylene polymer]

The ethylene polymer is not particularly limited as long as the content of a structural unit derived from ethylene in the polymer is 50% by mass or more, and may be a homopolymer of ethylene or a copolymer of ethylene and a comonomer. In the case of the copolymer, the structure is not particularly limited.

Examples of the comonomer include at least one monomer selected from propylene, an α-olefin having 4 to 20 carbon atoms, and conjugated polyenes, and among these, propylene and an α-olefin having 4 to 20 carbon atoms are preferable.

The α-olefin having 4 to 20 carbon atoms may be linear or branched, and examples thereof include 1-butene, 2-butene, 1-pentene, 3-methyl-1-butene, 1-hexene, 4-methyl-1-pentene, 3-methyl-1-pentene, 1-octene, 1-decene, 1-dodecene, 1-tetradecene, 1-hexadecene, 1-octadecene, and 1-eicosene.

The content of the structural unit derived from the comonomer in the ethylene polymer is preferably 50% by mass or less, more preferably 30% by mass or less, and particularly preferably 20% by mass or less, from the viewpoint of, for example, the unlikelihood of blocking of pellets or powder and easy handling of pellets or powder. An ethylene polymer having a propylene-derived or butene-derived structural unit content of 50% by mass is referred to as an ethylene polymer in the present specification.

### [Propylene polymer]

The propylene polymer is not particularly limited as long as the content of a structural unit derived from propylene in the polymer is 50% by mass or more, and may be a homopolymer of propylene or a copolymer of propylene and a comonomer. The structure of these (co)polymers is not particularly limited.

Examples of the comonomer include at least one monomer selected from ethylene, an α-olefin having 4 to 20 carbon atoms, and conjugated polyenes, and among these, ethylene and an α-olefin having 4 to 20 carbon atoms are preferable.

Examples of the α-olefin having 4 to 20 carbon atoms include, for example, the same α-olefins as the α-olefins having 4 to 20 carbon atoms mentioned in the section of the ethylene polymer.

The content of the structural unit derived from the comonomer in the propylene polymer is preferably 50% by mass or less, more preferably 30% by mass or less, and particularly preferably 20% by mass or less, from the viewpoint of, for example, the unlikelihood of blocking of pellets or powder and easy handling of pellets or powder. A propylene polymer having a butene-derived structural unit content of 50% by mass is referred to as a propylene polymer in the present specification.

### [Butene polymer]

The butene polymer is not particularly limited as long as the content of a structural unit derived from butene in the polymer is 50% by mass or more, and may be a homopolymer of butene, particularly 1-butene, or a copolymer of butene (particularly 1-butene) and a comonomer. The structure of these (co)polymers is not particularly limited.

Examples of the comonomer include at least one monomer selected from ethylene, propylene, an α-olefin having 5 to 20 carbon atoms, and conjugated polyenes, and among these, ethylene, propylene, and an α-olefin having 5 to 20 carbon atoms are preferable.

Examples of the α-olefin having 5 to 20 carbon atoms include, for example, the same α-olefins as the α-olefins having 5 to 20 carbon atoms mentioned in the section of the ethylene polymer.

The content of the structural unit derived from the comonomer in the butene polymer is preferably 50% by mass or less, more preferably 30% by mass or less, and particularly preferably 20% by mass or less, from the viewpoint of, for example, the unlikelihood of blocking of pellets or powder and easy handling of pellets or powder.

### <Method of synthesizing present modified product>

There are no particular limitations on the method of synthesizing the present modified product, as long as a graft-modified product obtained by graft-modifying the base polymer with the carbodiimide monomer can be obtained, the method is preferably a method in which a radical initiator and the carbodiimide monomer are added to a solution in which the base polymer is dissolved or dispersed in a solvent, preferably a solution in which the base polymer is dissolved in an organic solvent, to cause a reaction (graft reaction), from the viewpoint of, for example, easily synthesizing the present modified product. When a reaction apparatus having a stirring capability capable of homogeneously fluidizing the base polymer is used, the solvent may not be used.

According to the above method, since graft polymerization occurs, a graft-modified product is obtained.

The amount of the carbodiimide monomer used in the graft reaction is preferably 10 to 1000 mol, and more preferably from 10 to 800 mol, based on 1 mol of the base polymer, from the viewpoint, for example, that the present modified product having a graft ratio within the above range can be easily obtained, and the formation of a polymer of the carbodiimide monomer itself (hereinafter, also referred to as "non-grafted polymer") can be suppressed.

Examples of the radical initiator include organic peroxides and azo compounds, and specific examples thereof include organic peroxides such as benzoyl peroxide, dichlorobenzoyl peroxide, dicumyl peroxide, di-tert-butyl peroxide, 2,5-dimethyl-2,5-di(peroxybenzoate)hexyne-3, 1,4-bis(tert-butylperoxyisopropyl)benzene, lauroyl peroxide, tert-butyl peracetate, 2,5-dimethyl-2,5-di(tert-butylperoxy)hexyne-3, 2,5-dimethyl-2,5-di(tert-butylperoxy) hexane, tert-butyl perbenzoate, tert-butyl perphenylacetate, tert-butyl perisobutyrate, tert-butyl per-sec-octoate, tert-butyl perpivalate, cumyl perpivalate, tert-butyl perdiethylacetate, and tert-butylperoxyisopropyl monocarbonate(tert-butylperoxyisopropyl monocarbonate); and azo compounds such as azobisisobutyronitrile and dimethylazoisobutyrate. Among these, organic peroxides such as dicumyl peroxide, di-tert-butyl peroxide, 2,5-dimethyl-2,5-di(tert-butylperoxy)hexyne-3, 2,5-dimethyl-2,5-di(tert-butylperoxy) hexane, 1,4-bis(tert-butylperoxyisopropyl) benzene, and tert-butylperoxyisopropyl monocarbonate are preferable.

The radical initiator may be used alone or two or more kinds thereof may be used.

The amount of the radical initiator to be used in the graft reaction is preferably 0.01 mol or more, more preferably 0.05 mol or more, and preferably 0.7 mol or less, more preferably 0.5 mol or less, based on 1 mol of the carbodiimide monomer, from the viewpoint, for example, that the graft reaction efficiently occurs and the present modified product having a graft ratio in the above range can be easily obtained.

The organic solvent is preferably an organic solvent that does not significantly inhibit the graft reaction of the carbodiimide monomer and has affinity for the base polymer in a temperature range in which the graft reaction is performed. Specific examples of such an organic solvent include aromatic hydrocarbon solvents such as benzene, toluene, and xylene; aliphatic hydrocarbon solvents such as pentane, hexane, heptane, octane, nonane, and decane; alicyclic hydrocarbon solvents such as cyclohexane, methylcyclohexane, and decahydronaphthalene; chlorinated hydrocarbon solvents such as chlorobenzene, dichlorobenzene, trichlorobenzene, methylene chloride, chloroform, carbon tetrachloride, and tetrachloroethylene; alcohol solvents such as methanol, ethanol, n-propanol, iso-propanol, n-butanol, sec-butanol, and tert-butanol; ketone solvents such as acetone, methyl ethyl ketone, and methyl isobutyl ketone; ester solvents such as ethyl acetate, and dimethyl phthalate; and ether solvents such as dimethyl ether, diethyl ether, di-n-amyl ether, tetrahydrofuran, and dioxyanisole. Alternatively, suspension polymerization or emulsion polymerization may be carried out using water as a solvent. These solvents may be used alone or two or more kinds thereof may be used.

By the use of the solvent(s), the reaction solution preferably becomes a homogeneous phase, but may become a plurality of heterogeneous phases.

In order to perform the graft reaction in a region where the liquid containing the base polymer can be homogeneously stirred, the concentration of the base polymer in the liquid is usually set to 50 to 500 g/L, but is preferably set to 200 to 500 g/L to achieve a high graft ratio.

The radical initiator and the carbodiimide monomer may be added all at once to a liquid containing the base polymer (or the base polymer itself) to initiate the graft reaction, but to achieve a high graft ratio, the graft reaction is preferably performed by sequentially adding the radical initiator and the carbodiimide monomer over a period of about 0.1 to 5 hours.

When the radical initiator and the carbodiimide monomer are added to the base polymer or a solution in which the base polymer is dissolved or dispersed in a solvent, the order of addition is not particularly limited. For example, when the radical initiator and the carbodiimide monomer are added sequentially as described above, the radical initiator and the carbodiimide monomer may be added sequentially, or the radical initiator may be added sequentially after the carbodiimide monomer is added first.

The graft reaction is desirably performed at a temperature of usually 60°C or higher, preferably 100°C or higher, and usually 200°C or lower, preferably 160°C or lower, for usually 2 hours or more, preferably 3 hours or more, and usually 10 hours or less, preferably 8 hours or less.

From the present modified product obtained by the graft reaction, the solvent used, the unreacted radical initiator and carbodiimide monomer, and the non-grafted polymer produced as a by-product may be purified and isolated by known methods such as filtration, centrifugation, reprecipitation and/or washing.

In this case, from the viewpoint of, for example, easily obtaining the present composition having more excellent adhesiveness, the non-grafted polymer that is contained in the present modified product is desirably purified and isolated so that the content thereof becomes preferably 5% by mass or less and more preferably 2% by mass or less.

### <<Laminate>>

The laminate according to one embodiment of the present invention has a layer (A) comprising polyethylene terephthalate or a biodegradable polymer and an adhesive layer (B) comprising the present composition, and at least a part of the layer (B) is in contact with the layer (A).

The laminate has the layer (B) and thus has excellent interlayer adhesiveness.

The laminate is not particularly limited as long as the laminate comprises the layer (A) and the layer (B), may comprise two or more layers of the layer (A), and may comprise two or more layers of the layer (B). When two or more layers of the layer (A) are comprised, these layers may be the same layer or may be different layers. Similarly, when two or more layers of the layer (B) are comprised, these layers may be the same layer or may be different layers.

As the laminate, a laminate comprising the layer (A) and the layer (B), in particular, a laminate consisting of the layer (A) and the layer (B), or a laminate comprising the layer (A), the layer (B), and the layer (A) in this order, in particular, a laminate in which the layer (A), the layer (B), and the layer (A) are laminated in this order is preferable.

The laminate comprising the layer (A) and the layer (B) may be, for example, a laminate comprising the layer (A), the layer (B), and a layer (C) in this order.

The layer (C) is not particularly limited as long as the layer (C) is a layer other than the layer (A) and the layer (B), and examples thereof include layers comprising or consisting of: metal; glass; wood; paper; cloth; a thermoplastic resin such as polyester, polyphenylene sulfide, polyamide, polyacetal, polycarbonate, poly(meth)acrylate, an olefin polymer, polystyrene, rubber, a modified fluororesin, a biomass plastic, or an engineering plastic other than these; or a thermosetting resin.

The laminate is not limited to a laminate film (sheet), and may have any of various known shapes such as a hollow container, a cup, and a tray.

The layer (B) is a layer comprising the present composition and can be obtained using the present composition.

The content of the present composition in the layer (B) is preferably 80% to 100% by mass and more preferably 90% to 100% by mass.

The presence of the present modified product in the layer (B) can be determined by infrared spectroscopic analysis.

The thickness of the layer (B) is not particularly limited and may be appropriately selected depending on the application of the laminate, but is preferably 2 to 1000 um.

The thickness of the layer (A) is also not particularly limited and may be appropriately selected depending on the application of the laminate, but is preferably 2 to 1000 µm.

The layer (A) is not particularly limited as long as the layer (A) comprises polyethylene terephthalate or a biodegradable polymer, but is preferably a layer consisting (only) of polyethylene terephthalate or (only) of a biodegradable polymer.

The raw material (for example, olefin) of the polyethylene terephthalate or biodegradable polymer may be a polymer for which only a biomass-derived raw material is used, a polymer for which only a fossil fuel-derived raw material is used, or a polymer for which both a biomass-derived raw material and a fossil fuel-derived raw material are used.

The polyethylene terephthalate or biodegradable polymer is preferably a polymer for which a biomass-derived raw material is used, from the viewpoint of environmental impact reduction (mainly greenhouse gas reduction).

Examples of the biodegradable polymer include polylactic acid, polyglycolic acid, a lactic acid-glycolic acid copolymer, polyhydroxybutyrate, polybutylene succinate, polyvinyl alcohol, cellulose, cellulose acetate, polyethylene succinate, polycaprolactone, modified polybutylene succinate adipate, modified polybutylene succinate carbonate, and polybutylene adipate/terephthalate, and among these, polylactic acid is preferable.

The layer (A) may contain, as necessary, an additive such as a phenol antioxidant, a phosphorus antioxidant, a sulfur antioxidant, a metal compound, or a metal salt of a higher fatty acid, which are usually added to resins, to an extent that the object of the present invention is not impaired.

The additive may be an additive for which only a biomass-derived raw material is used as a raw material thereof, an additive for which only a fossil fuel-derived raw material is used, or an additive for which both a biomass-derived raw material and a fossil fuel-derived raw material are used.

The laminate is preferably a laminate obtained by laminate molding, co-extrusion molding, blow molding, or a co-injection molding, from the viewpoint of, for example, easily obtaining a laminate having an excellent adhesive strength.

A method for producing the laminate varies with, for example, the shape, size, and required properties of the final product and is not particularly limited. However, the laminate is preferably produced by a method comprising a step 1 of performing co-extrusion molding, laminate molding, blow molding, or co-injection molding on a resin composition comprising polyethylene terephthalate or a biodegradable polymer and the present composition, from the viewpoint of, for example, easily producing the present laminate having excellent interlayer adhesiveness and desired properties.

As the co-extrusion molding, the laminate molding, the blow molding, and the co-injection molding, conventionally known methods may be employed.

The temperature at the time of producing the laminate is preferably 160°C to 250°C and more preferably 200°C to 230°C.

Since the laminate comprises the layer (B), it is possible to easily obtain a laminate having an excellent adhesive strength even when the temperature at the time of producing the laminate is low, specifically, 230°C or lower.

When the layer (A) is a layer comprising a biodegradable polymer, the step 1 is preferably performed at a temperature lower than the pyrolysis temperature of the biodegradable polymer, from the viewpoint of, for example, easily producing the present laminate having excellent interlayer adhesiveness and desired properties.

The temperature lower than the pyrolysis temperature (Td) is preferably a temperature lower than the pyrolysis temperature (Td) of the biodegradable polymer by 20°C or more.

When the step 1 is performed at the temperature, it is possible to suppress the pyrolysis of the biodegradable polymer (for example, it is possible to suppress the reduction rate of the number average molecular weight of the biodegradable polymer, which is measured by gel permeation chromatography (GPC), before and after an adhesion step at less than 10% by mass) and to obtain a laminate while suppressing the deterioration of the mechanical properties of the biodegradable polymer.

Examples of the laminate molding include the following methods (1) and (2).
(1) A method of heat-sealing using, for example, a calender roll molding machine or a compression molding machine at a temperature equal to or higher than a temperature at which at least one of the previously molded layer (A) and layer (B) is melted.
(2) A method of heat-sealing the layer previously molded layer (A) or layer (B) to another layer on which extrusion molding or calender molding is being performed.

At the time of producing a laminate by pressing (heat-sealing) the previously molded layer (A) and layer (B) using a compression molding machine in the method (1), for example, in the case of heat-sealing at 230°C, a layer having a high adhesive strength can be formed even when the heat-sealing time is as short as preferably 20 seconds or less, more preferably 10 seconds or less, still more preferably 5 seconds or less.

Examples of the co-extrusion molding include a method of forming the heat-sealed layer (A) and layer (B) by performing extrusion molding on a resin composition comprising polyethylene terephthalate or a biodegradable polymer and the present composition at the same time with a multi-layer extrusion molding machine.

Examples of the co-injection molding include a method of injecting (for example, bilayer injection molding or sandwich injection molding) a resin composition comprising molten polyethylene terephthalate or biodegradable polymer and the molten present composition into, for example, a mold at the same time or at staggered timing.

### Examples

An embodiment of the present invention will be described below with reference to Examples, but the present invention is not limited to these Examples.

### <Method for measuring graft ratio>

The ¹H-NMR spectrum of a graft polymer obtained in the following synthesis example was obtained using Nuclear Magnetic Resonance Spectrometer AVANCE IIIcryo-500 (500 MHz) made by Bruker Biospin under conditions of measurement solvent: 1,1,2,2-tetrachloroethane-d2, measurement temperature: 120°C, spectrum width: 20 ppm, pulse repetition time: 7.0 seconds, and pulse width: 5.00 µsec (45° pulse). In the obtained spectrum, the graft ratio of the graft polymer obtained in the following synthesis example was calculated from the peak intensity ratio between protons of hydrocarbon groups bonded to carbodiimide groups present in 3.0 ppm to 4.0 ppm and protons bonded to all hydrocarbon groups derived from the base polymer present in 0.3 ppm to 2.5 ppm.

### [Synthesis Example 1]

Into a 1L autoclave, 25.0 g of LLDPE (base polymer, comonomer species: 1-hexene, comonomer amount: 1.6% by mass, Mw: 164,000, Mn: 63,000, Mw/Mn: 2.60) and 150 mL of toluene were charged, and the autoclave was sealed after nitrogen substitution. Thereafter, the internal temperature of the autoclave was raised to 140°C, and while maintaining the temperature, 28.1 mmol of vinylphenylcyclohexylcarbodiimide and 2.2 mmol of dicumyl peroxide (PERCUMYL D, manufactured by NOF Corporation) were fed over 2 hours while stirring at a stirring rate of 400 rpm using a double anchor blade. Thereafter, the mixture was further stirred for 2 hours, and then 250 mL of toluene was fed over 15 minutes to dilute the reaction solution.

Thereafter, the internal temperature of the autoclave was cooled to 50°C, and then a slurry-like reaction solution was taken out after depressurization. To the obtained reaction solution, 400 mL of acetone was added, and after stirring for 10 minutes, the stirred solution was filtered and separated into solids and filtrate. The process from the addition of acetone to the filtration was further repeated twice on the obtained solids. Unreacted vinylphenylcyclohexylcarbodiimide and a homopolymer of the vinylphenylcyclohexylcarbodiimide were removed by these three times of filtration.

The solids after the third filtration were dried in a vacuum dryer at 70°C for 10 hours to obtain 25.71 g of a graft polymer (P-1). The graft ratio was 2.7% by mass.

### [Synthesis Example 2]

Into a 500 mL separable flask, 25.0 g of polypropylene (base polymer, Mw: 313,000, Mn: 70,800, Mw/Mn: 4.42) and 110 mL of xylene were charged, and the separable flask was substituted with nitrogen gas. Thereafter, the internal temperature of the flask was raised to 120°C, and while maintaining the temperature, 28.1 mmol of vinylphenyl cyclohexylcarbodiimide was charged, and then 2.2 mmol of tert-butylperoxyisopropyl monocarbonate (PERBUTYL I, manufactured by NOF Corporation) dissolved in 10 mL of xylene was fed over 10 minutes while stirring at a stirring rate of 400 rpm using a double anchor blade. Thereafter, the mixture was further stirred for 3 hours, and then 200 mL of xylene was fed to dilute the reaction solution.

Thereafter, the internal temperature of the separable flask was cooled to 50°C, and then a slurry-like reaction solution was taken out. To the obtained reaction solution, 400 mL of acetone was added, and after stirring for 10 minutes, the stirred solution was filtered and separated into solids and filtrate. The process from the addition of acetone to the filtration was further repeated three times on the obtained solids. Unreacted vinylphenylcyclohexylcarbodiimide and a homopolymer of the vinylphenylcyclohexylcarbodiimide were removed by these four times of filtration.

The solids after the fourth filtration were dried in a vacuum dryer at 90°C for 10 hours to obtain 25.13 g of a graft polymer (P-2). The graft ratio was 1.5% by mass.

### [Synthesis Example 3]

Into a 500 mL separable flask, 25.0 g of LLDPE (the same polymer as the base polymer used in Synthesis Example 1) and 110 mL of xylene were charged, and the separable flask was substituted with nitrogen gas. Thereafter, the internal temperature of the flask was raised to 120°C, and while maintaining the temperature, 33.4 mmol of ethylphenylcarbodiimide methacrylate was charged, and then 2.2 mmol of tert-butylperoxyisopropyl monocarbonate (PERBUTYL I, manufactured by NOF Corporation) dissolved in 10 mL of xylene was fed over 10 minutes while stirring at a stirring rate of 400 rpm using a double anchor blade. Thereafter, the mixture was further stirred for 3 hours, and then 200 mL of xylene was fed to dilute the reaction solution.

Thereafter, the internal temperature of the separable flask was cooled to 50°C, and then a slurry-like reaction solution was taken out. To the obtained reaction solution, 400 mL of acetone was added, and after stirring for 10 minutes, the stirred solution was filtered and separated into solids and filtrate. The process from the addition of acetone to the filtration was further repeated three times on the obtained solids. Unreacted ethylphenylcarbodiimide methacrylate and a homopolymer of the ethylphenylcarbodiimide methacrylate were removed by these four times of filtration.

The solids after the fourth filtration were dried in a vacuum dryer at 90°C for 10 hours to obtain 25.87 g of a graft polymer (P-3). The graft ratio was 2.4% by mass.

### [Synthesis Example 4]

Into a 500 mL separable flask, 17.0 g of LLDPE (the same polymer as the base polymer used in Synthesis Example 1) and 78 mL of xylene were charged, and the separable flask was substituted with nitrogen gas. Thereafter, the internal temperature of the flask was raised to 120°C, and while maintaining the temperature, 24.5 mmol of ethylcyclohexylcarbodiimide methacrylate was charged, and then 1.68 mmol of tert-butylperoxyisopropyl monocarbonate (PERBUTYL I, manufactured by NOF Corporation) dissolved in 10 mL of xylene was fed over 10 minutes while stirring at a stirring rate of 400 rpm using a double anchor blade. Thereafter, the mixture was further stirred for 3 hours, and then 150 mL of xylene was fed to dilute the reaction solution.

Thereafter, the internal temperature of the separable flask was cooled to 50°C, and then a slurry-like reaction solution was taken out. To the obtained reaction solution, 400 mL of acetone was added, and after stirring for 10 minutes, the stirred solution was filtered and separated into solids and filtrate. The process from the addition of acetone to the filtration was further repeated three times on the obtained solids. Unreacted ethylcyclohexylcarbodiimide methacrylate and a homopolymer of the ethylcyclohexylcarbodiimide methacrylate were removed by these four times of filtration.

The solids after the fourth filtration were dried in a vacuum dryer at 90°C for 10 hours to obtain 17.49 g of a graft polymer (P-4). The graft ratio was 3.0% by mass.

### [Synthesis Example 5]

Into a 500 mL separable flask, 25.0 g of LLDPE (the same polymer as the base polymer used in Synthesis Example 1) and 110 mL of xylene were charged, and the separable flask was substituted with nitrogen gas. Thereafter, the internal temperature of the flask was raised to 120°C, and while maintaining the temperature, 35.0 mmol of ethyl-tert-butylcarbodiimide methacrylate was charged, and then 2.2 mmol of tert-butylperoxyisopropyl monocarbonate (PERBUTYL I, manufactured by NOF Corporation) dissolved in 10 mL of xylene was fed over 10 minutes while stirring at a stirring rate of 400 rpm using a double anchor blade. Thereafter, the mixture was further stirred for 3 hours, and then 200 mL of xylene was fed to dilute the reaction solution.

Thereafter, the internal temperature of the separable flask was cooled to 50°C, and then a slurry-like reaction solution was taken out. To the obtained reaction solution, 400 mL of acetone was added, and after stirring for 10 minutes, the stirred solution was filtered and separated into solids and filtrate. The process from the addition of acetone to the filtration was further repeated three times on the obtained solids. Unreacted ethyl-tert-butylcarbodiimide methacrylate and a homopolymer of the ethyl-tert-butylcarbodiimide methacrylate were removed by these four times of filtration.

The solids after the fourth filtration were dried in a vacuum dryer at 90°C for 10 hours to obtain 25.49 g of a graft polymer (P-5). The graft ratio was 1.7% by mass.

### [Synthesis Example 6]

Into a 500 mL separable flask, 17.1 g of LLDPE (the same polymer as the base polymer used in Synthesis Example 1) and 73 mL of xylene were charged, and the separable flask was substituted with nitrogen gas. Thereafter, the internal temperature of the flask was raised to 120°C, and while maintaining the temperature, 23.8 mmol of ethyl-n-butylcarbodiimide methacrylate was charged, and then 1.6 mmol of tert-butylperoxyisopropyl monocarbonate (PERBUTYL I, manufactured by NOF Corporation) dissolved in 10 mL of xylene was fed over 10 minutes while stirring at a stirring rate of 400 rpm using a double anchor blade. Thereafter, the mixture was further stirred for 3 hours, and then 150 mL of xylene was fed to dilute the reaction solution.

Thereafter, the internal temperature of the separable flask was cooled to 50°C, and then a slurry-like reaction solution was taken out. To the obtained reaction solution, 400 mL of acetone was added, and after stirring for 10 minutes, the stirred solution was filtered and separated into solids and filtrate. The process from the addition of acetone to the filtration was further repeated three times on the obtained solids. Unreacted ethyl-n-butylcarbodiimide methacrylate and a homopolymer of the ethyl-n-butylcarbodiimide methacrylate were removed by these four times of filtration.

The solids after the fourth filtration were dried in a vacuum dryer at 90°C for 10 hours to obtain 17.38 g of a graft polymer (P-6). The graft ratio was 1.6% by mass.

### [Synthesis Example 7]

Into a 500 mL separable flask, 14.0 g of LLDPE (the same polymer as the base polymer used in Synthesis Example 1) and 57 mL of xylene were charged, and the separable flask was substituted with nitrogen gas. Thereafter, the internal temperature of the flask was raised to 120°C, and while maintaining the temperature, 19.0 mmol of ethyl-p-chlorophenylcarbodiimide methacrylate was charged, and then 1.3 mmol of tert-butylperoxyisopropyl monocarbonate (PERBUTYL I, manufactured by NOF Corporation) dissolved in 10 mL of xylene was fed over 10 minutes while stirring at a stirring rate of 400 rpm using a double anchor blade. Thereafter, the mixture was further stirred for 3 hours, and then 150 mL of xylene was fed to dilute the reaction solution.

Thereafter, the internal temperature of the separable flask was cooled to 50°C, and then a slurry-like reaction solution was taken out. To the obtained reaction solution, 400 mL of acetone was added, and after stirring for 10 minutes, the stirred solution was filtered and separated into solids and filtrate. The process from the addition of acetone to the filtration was further repeated three times on the obtained solids. Unreacted ethyl-p-chlorophenylcarbodiimide methacrylate and a homopolymer of the ethyl-p-chlorophenylcarbodiimide methacrylate were removed by these four times of filtration.

The solids after the fourth filtration were dried in a vacuum dryer at 90°C for 10 hours to obtain 14.43 g of a graft polymer (P-7). The graft ratio was 2.8% by mass.

### [Synthesis Example 8]

Into a 500 mL separable flask, 17.0 g of LLDPE (the same polymer as the base polymer used in Synthesis Example 1) and 73 mL of xylene were charged, and the separable flask was substituted with nitrogen gas. Thereafter, the internal temperature of the flask was raised to 120°C, and while maintaining the temperature, 22.5 mmol of ethyl-p-methoxyphenylcarbodiimide methacrylate was charged, and then 1.5 mmol of tert-butylperoxyisopropyl monocarbonate (PERBUTYL I, manufactured by NOF Corporation) dissolved in 10 mL of xylene was fed over 10 minutes while stirring at a stirring rate of 400 rpm using a double anchor blade. Thereafter, the mixture was further stirred for 3 hours, and then 150 mL of xylene was fed to dilute the reaction solution.

Thereafter, the internal temperature of the separable flask was cooled to 50°C, and then a slurry-like reaction solution was taken out. To the obtained reaction solution, 400 mL of acetone was added, and after stirring for 10 minutes, the stirred solution was filtered and separated into solids and filtrate. The process from the addition of acetone to the filtration was further repeated three times on the obtained solids. Unreacted ethyl-p-methoxyphenylcarbodiimide methacrylate and a homopolymer of the ethyl-p-methoxyphenylcarbodiimide methacrylate were removed by these four times of filtration.

The solids after the fourth filtration were dried in a vacuum dryer at 90°C for 10 hours to obtain 17.37 g of a graft polymer (P-8). The graft ratio was 1.6% by mass.

### [Synthesis Example 9]

Into a 500 mL separable flask, 20.0 g of polypropylene (the same polymer as the base polymer used in Synthesis Example 2) and 86 mL of xylene were charged, and the separable flask was substituted with nitrogen gas. Thereafter, the internal temperature of the flask was raised to 120°C, and while maintaining the temperature, 22.6 mmol of ethylphenylcarbodiimide methacrylate was charged, and then 9.2 mmol of tert-butylperoxyisopropyl monocarbonate (PERBUTYL I, manufactured by NOF Corporation) dissolved in 10 mL of xylene was fed over 10 minutes while stirring at a stirring rate of 400 rpm using a double anchor blade. Thereafter, the mixture was further stirred for 3 hours, and then 200 mL of xylene was fed to dilute the reaction solution.

Thereafter, the internal temperature of the separable flask was cooled to 50°C, and then a slurry-like reaction solution was taken out. To the obtained reaction solution, 400 mL of acetone was added, and after stirring for 10 minutes, the stirred solution was filtered and separated into solids and filtrate. The process from the addition of acetone to the filtration was further repeated three times on the obtained solids. Unreacted ethylphenylcarbodiimide methacrylate and a homopolymer of the ethylphenylcarbodiimide methacrylate were removed by these four times of filtration.

The solids after the fourth filtration were dried in a vacuum dryer at 90°C for 10 hours to obtain 19.89 g of a graft polymer (P-9). The graft ratio was 1.5% by mass.

### [Synthesis Example 10]

Into a 500 mL separable flask, 19.0 g of polypropylene (the same polymer as the base polymer used in Synthesis Example 2) and 81 mL of xylene were charged, and the separable flask was substituted with nitrogen gas. Thereafter, the internal temperature of the flask was raised to 120°C, and while maintaining the temperature, 20 mmol of ethylcyclohexylcarbodiimide methacrylate was charged, and then 9.2 mmol of tert-butylperoxyisopropyl monocarbonate (PERBUTYL I, manufactured by NOF Corporation) dissolved in 10 mL of xylene was fed over 10 minutes while stirring at a stirring rate of 400 rpm using a double anchor blade. Thereafter, the mixture was further stirred for 3 hours, and then 200 mL of xylene was fed to dilute the reaction solution.

Thereafter, the internal temperature of the separable flask was cooled to 50°C, and then a slurry-like reaction solution was taken out. To the obtained reaction solution, 400 mL of acetone was added, and after stirring for 10 minutes, the stirred solution was filtered and separated into solids and filtrate. The process from the addition of acetone to the filtration was further repeated three times on the obtained solids. Unreacted ethylcyclohexylcarbodiimide methacrylate and a homopolymer of the ethylcyclohexylcarbodiimide methacrylate were removed by these four times of filtration.

The solids after the fourth filtration were dried in a vacuum dryer at 90°C for 10 hours to obtain 18.89 g of a graft polymer (P-10). The graft ratio was 1.4% by mass.

### [Synthesis Example 11]

Into a 500 mL separable flask, 15.0 g of polypropylene (the same polymer as the base polymer used in Synthesis Example 2) and 62 mL of xylene were charged, and the separable flask was substituted with nitrogen gas. Thereafter, the internal temperature of the flask was raised to 120°C, and while maintaining the temperature, 22.1 mmol of ethyl-tert-butylcarbodiimide methacrylate was charged, and then 9.2 mmol of tert-butylperoxyisopropyl monocarbonate (PERBUTYL I, manufactured by NOF Corporation) dissolved in 10 mL of xylene was fed over 10 minutes while stirring at a stirring rate of 400 rpm using a double anchor blade. Thereafter, the mixture was further stirred for 3 hours, and then 150 mL of xylene was fed to dilute the reaction solution.

Thereafter, the internal temperature of the separable flask was cooled to 50°C, and then a slurry-like reaction solution was taken out. To the obtained reaction solution, 400 mL of acetone was added, and after stirring for 10 minutes, the stirred solution was filtered and separated into solids and filtrate. The process from the addition of acetone to the filtration was further repeated three times on the obtained solids. Unreacted ethyl-tert-butylcarbodiimide methacrylate and a homopolymer of the ethyl-tert-butylcarbodiimide methacrylate were removed by these four times of filtration.

The solids after the fourth filtration were dried in a vacuum dryer at 90°C for 10 hours to obtain 15.37 g of a graft polymer (P-11). The graft ratio was 1.3% by mass.

### [Synthesis Example 12]

Into a 500 mL separable flask, 15.0 g of polypropylene (the same polymer as the base polymer used in Synthesis Example 2) and 62 mL of xylene were charged, and the separable flask was substituted with nitrogen gas. Thereafter, the internal temperature of the flask was raised to 120°C, and while maintaining the temperature, 17.8 mmol of ethyl-p-chlorophenylcarbodiimide methacrylate was charged, and then 6.9 mmol of tert-butylperoxyisopropyl monocarbonate (PERBUTYL I, manufactured by NOF Corporation) dissolved in 10 mL of xylene was fed over 10 minutes while stirring at a stirring rate of 400 rpm using a double anchor blade. Thereafter, the mixture was further stirred for 3 hours, and then 150 mL of xylene was fed to dilute the reaction solution.

Thereafter, the internal temperature of the separable flask was cooled to 50°C, and then a slurry-like reaction solution was taken out. To the obtained reaction solution, 400 mL of acetone was added, and after stirring for 10 minutes, the stirred solution was filtered and separated into solids and filtrate. The process from the addition of acetone to the filtration was further repeated three times on the obtained solids. Unreacted ethyl-p-chlorophenylcarbodiimide methacrylate and a homopolymer of the ethyl-p-chlorophenylcarbodiimide methacrylate were removed by these four times of filtration.

The solids after the fourth filtration were dried in a vacuum dryer at 90°C for 10 hours to obtain 14.60 g of a graft polymer (P-12). The graft ratio was 1.6% by mass.

### [Synthesis Example 13]

Into a 500 mL separable flask, 20.0 g of polypropylene (the same polymer as the base polymer used in Synthesis Example 2) and 86 mL of xylene were charged, and the separable flask was substituted with nitrogen gas. Thereafter, the internal temperature of the flask was raised to 120°C, and while maintaining the temperature, 22.5 mmol of ethyl-p-methoxyphenylcarbodiimide methacrylate was charged, and then 9.2 mmol of tert-butylperoxyisopropyl monocarbonate (PERBUTYL I, manufactured by NOF Corporation) dissolved in 10 mL of xylene was fed over 10 minutes while stirring at a stirring rate of 400 rpm using a double anchor blade. Thereafter, the mixture was further stirred for 3 hours, and then 200 mL of xylene was fed to dilute the reaction solution.

Thereafter, the internal temperature of the separable flask was cooled to 50°C, and then a slurry-like reaction solution was taken out. To the obtained reaction solution, 400 mL of acetone was added, and after stirring for 10 minutes, the stirred solution was filtered and separated into solids and filtrate. The process from the addition of acetone to the filtration was further repeated three times on the obtained solids. Unreacted ethyl-p-methoxyphenylcarbodiimide methacrylate and a homopolymer of the ethyl-p-methoxyphenylcarbodiimide methacrylate were removed by these four times of filtration.

The solids after the fourth filtration were dried in a vacuum dryer at 90°C for 10 hours to obtain 20.30 g of a graft polymer (P-13). The graft ratio was 1.6% by mass.

### [Synthesis Example 14]

Into a 500 mL separable flask, 23 g of LLDPE (the same polymer as the base polymer used in Synthesis Example 1) and 100 mL of xylene were charged, and the separable flask was substituted with nitrogen gas. Thereafter, the internal temperature of the flask was raised to 120°C, and while maintaining the temperature, 30 mmol of ethylisopropylcarbodiimide methacrylate was charged, and then 2.0 mmol of tert-butylperoxyisopropyl monocarbonate (PERBUTYL I, manufactured by NOF Corporation) dissolved in 10 mL of xylene was fed over 10 minutes while stirring at a stirring rate of 400 rpm using a double anchor blade. Thereafter, the mixture was further stirred for 3 hours, and then 150 mL of xylene was fed to dilute the reaction solution.

Thereafter, the internal temperature of the separable flask was cooled to 50°C, and then a slurry-like reaction solution was taken out. To the obtained reaction solution, 400 mL of acetone was added, and after stirring for 10 minutes, the stirred solution was filtered and separated into solids and filtrate. The process from the addition of acetone to the filtration was further repeated three times on the obtained solids.

The solids after the fourth filtration were dried in a vacuum dryer at 90°C for 10 hours to obtain 23.54 g of a graft polymer (P-14). The graft ratio was 1.7% by mass.

### [Synthesis Example 15]

Into a 500 mL separable flask, 13.2 g of polypropylene (the same polymer as the base polymer used in Synthesis Example 2) and 54 mL of xylene were charged, and the separable flask was substituted with nitrogen gas. Thereafter, the internal temperature of the flask was raised to 120°C, and while maintaining the temperature, 19.5 mmol of ethylisopropylcarbodiimide methacrylate was charged, and then 8.0 mmol of tert-butylperoxyisopropyl monocarbonate (PERBUTYL I, manufactured by NOF Corporation) dissolved in 10 mL of xylene was fed over 10 minutes while stirring at a stirring rate of 400 rpm using a double anchor blade. Thereafter, the mixture was further stirred for 3 hours, and then 150 mL of xylene was fed to dilute the reaction solution.

Thereafter, the internal temperature of the separable flask was cooled to 50°C, and then a slurry-like reaction solution was taken out. To the obtained reaction solution, 400 mL of acetone was added, and after stirring for 10 minutes, the stirred solution was filtered and separated into solids and filtrate. The process from the addition of acetone to the filtration was further repeated three times on the obtained solids.

The solids after the fourth filtration were dried in a vacuum dryer at 90°C for 10 hours to obtain 13.29 g of a graft polymer (P-15). The graft ratio was 1.7% by mass.

### [Synthesis Example 16]

Into a 500 mL separable flask, 25.0 g of LLDPE (the same polymer as the base polymer used in Synthesis Example 1) and 120 mL of xylene were charged, and the separable flask was substituted with nitrogen gas. Thereafter, the internal temperature of the flask was raised to 120°C, and while maintaining the temperature, 33.4 mmol of glycidyl methacrylate was charged, and then 2.2 mmol of tert-butylperoxyisopropyl monocarbonate (PERBUTYL I, manufactured by NOF Corporation) dissolved in 10 mL of xylene was fed over 10 minutes while stirring at a stirring rate of 400 rpm using a double anchor blade. Thereafter, the mixture was further stirred for 3 hours, and then 200 mL of xylene was fed to dilute the reaction solution.

Thereafter, the internal temperature of the separable flask was cooled to 50°C, and then a slurry-like reaction solution was taken out. To the obtained reaction solution, 400 mL of acetone was added, and after stirring for 10 minutes, the stirred solution was filtered and separated into solids and filtrate. The process from the addition of acetone to the filtration was further repeated three times. Unreacted glycidyl methacrylate and a homopolymer of the glycidyl methacrylate were removed by these four times of filtration.

The solids after the fourth filtration were dried in a vacuum dryer at 90°C for 10 hours to obtain 25.95 g of a graft polymer (P-16). The graft ratio was 2.4% by mass.

### [Synthesis Example 17]

Into a 500 mL separable flask, 25.0 g of polypropylene (the same polymer as the base polymer used in Synthesis Example 2) and 120 mL of xylene were charged, and the separable flask was substituted with nitrogen gas. Thereafter, the internal temperature of the flask was raised to 120°C, and while maintaining the temperature, 33.4 mmol of glycidyl methacrylate was charged, and then 11 mmol of tert-butylperoxyisopropyl monocarbonate (PERBUTYL I, manufactured by NOF Corporation) dissolved in 10 mL of xylene was fed over 10 minutes while stirring at a stirring rate of 400 rpm using a double anchor blade. Thereafter, the mixture was further stirred for 3 hours, and then 200 mL of xylene was fed to dilute the reaction solution.

Thereafter, the internal temperature of the separable flask was cooled to 50°C, and then a slurry-like reaction solution was taken out. To the obtained reaction solution, 400 mL of acetone was added, and after stirring for 10 minutes, the stirred solution was filtered and separated into solids and filtrate. The process from the addition of acetone to the filtration was further repeated three times on the obtained solids. Unreacted glycidyl methacrylate and a homopolymer of the glycidyl methacrylate were removed by these four times of filtration.

The solids after the fourth filtration were dried in a vacuum dryer at 90°C for 10 hours to obtain 25.26 g of a graft polymer (P-17). The graft ratio was 1.0% by mass.

### [Synthesis Example 18]

Into a 500 mL separable flask, 12.5 g of LLDPE (the same polymer as the base polymer used in Synthesis Example 1) and 50 mL of xylene were charged, and the separable flask was substituted with nitrogen gas. Thereafter, the internal temperature of the flask was raised to 120°C, and while maintaining the temperature, 16.7 mmol of vinylphenylcyclohexylcarbodiimide was charged, and then 1.1 mmol of tert-butylperoxyisopropyl monocarbonate (PERBUTYL I, manufactured by NOF Corporation) dissolved in 10 mL of xylene was fed over 10 minutes while stirring at a stirring rate of 400 rpm using a double anchor blade. Thereafter, the mixture was further stirred for 3 hours, and then 200 mL of xylene was fed to dilute the reaction solution.

Thereafter, the internal temperature of the separable flask was cooled to 50°C, and then a slurry-like reaction solution was taken out. To the obtained reaction solution, 400 mL of acetone was added, and after stirring for 10 minutes, the stirred solution was filtered and separated into solids and filtrate. The process from the addition of acetone to the filtration was further repeated three times on the obtained solids. Unreacted vinylphenylcyclohexylcarbodiimide and a homopolymer of the vinylphenylcyclohexylcarbodiimide were removed by these four times of filtration.

The solids after the fourth filtration were dried in a vacuum dryer at 90°C for 10 hours to obtain 13.48 g of a graft polymer (P-18). The graft ratio was 7.6% by mass.

### [Synthesis Example 19]

Into a 500 mL separable flask, 25.0 g of polypropylene (the same polymer as the base polymer used in Synthesis Example 2) and 110 mL of xylene were charged, and the separable flask was substituted with nitrogen gas. Thereafter, the internal temperature of the flask was raised to 120°C, and while maintaining the temperature, 14.1 mmol of vinylphenylcyclohexylcarbodiimide was charged, and then 1.1 mmol of tert-butylperoxyisopropyl monocarbonate (PERBUTYL I, manufactured by NOF Corporation) dissolved in 10 mL of xylene was fed over 10 minutes while stirring at a stirring rate of 400 rpm using a double anchor blade. Thereafter, the mixture was further stirred for 3 hours, and then 200 mL of xylene was fed to dilute the reaction solution.

Thereafter, the internal temperature of the separable flask was cooled to 50°C, and then a slurry-like reaction solution was taken out. To the obtained reaction solution, 400 mL of acetone was added, and after stirring for 10 minutes, the stirred solution was filtered and separated into solids and filtrate. The process from the addition of acetone to the filtration was further repeated three times on the obtained solids. Unreacted vinylphenylcyclohexylcarbodiimide and a homopolymer of the vinylphenylcyclohexylcarbodiimide were removed by these four times of filtration.

The solids after the fourth filtration were dried in a vacuum dryer at 90°C for 10 hours to obtain 24.72 g of a graft polymer (P-19). The graft ratio was 0.5% by mass.

### [Synthesis Example 20]

Into a 500 mL separable flask, 15.0 g of polypropylene (the same polymer as the base polymer used in Synthesis Example 2) and 62 mL of xylene were charged, and the separable flask was substituted with nitrogen gas. Thereafter, the internal temperature of the flask was raised to 120°C, and while maintaining the temperature, 44.2 mmol of ethyl-tert-butylcarbodiimide methacrylate was charged, and then 18.4 mmol of tert-butylperoxyisopropyl monocarbonate (PERBUTYL I, manufactured by NOF Corporation) dissolved in 10 mL of xylene was fed over 10 minutes while stirring at a stirring rate of 400 rpm using a double anchor blade. Thereafter, the mixture was further stirred for 3 hours, and then 150 mL of xylene was fed to dilute the reaction solution.

Thereafter, the internal temperature of the separable flask was cooled to 50°C, and then a slurry-like reaction solution was taken out. To the obtained reaction solution, 400 mL of acetone was added, and after stirring for 10 minutes, the stirred solution was filtered and separated into solids and filtrate. The process from the addition of acetone to the filtration was further repeated three times on the obtained solids. Unreacted ethyl-tert-butylcarbodiimide methacrylate and a homopolymer of the ethyl-tert-butylcarbodiimide methacrylate were removed by these four times of filtration.

The solids after the fourth filtration were dried in a vacuum dryer at 90°C for 10 hours to obtain 16.11 g of a graft polymer (P-20). The graft ratio was 3.5% by mass.

### [Synthesis Example 21]

Into a 500 mL separable flask, 15.0 g of polypropylene (the same polymer as the base polymer used in Synthesis Example 2) and 62 mL of xylene were charged, and the separable flask was substituted with nitrogen gas. Thereafter, the internal temperature of the flask was raised to 120°C, and while maintaining the temperature, 11.1 mmol of ethyl-tert-butylcarbodiimide methacrylate was charged, and then 4.6 mmol of tert-butylperoxyisopropyl monocarbonate (PERBUTYL I, manufactured by NOF Corporation) dissolved in 10 mL of xylene was fed over 10 minutes while stirring at a stirring rate of 400 rpm using a double anchor blade. Thereafter, the mixture was further stirred for 3 hours, and then 150 mL of xylene was fed to dilute the reaction solution.

Thereafter, the internal temperature of the separable flask was cooled to 50°C, and then a slurry-like reaction solution was taken out. To the obtained reaction solution, 400 mL of acetone was added, and after stirring for 10 minutes, the stirred solution was filtered and separated into solids and filtrate. The process from the addition of acetone to the filtration was further repeated three times on the obtained solids. Unreacted ethyl-tert-butylcarbodiimide methacrylate and a homopolymer of the ethyl-tert-butylcarbodiimide methacrylate were removed by these four times of filtration.

The solids after the fourth filtration were dried in a vacuum dryer at 90°C for 10 hours to obtain 15.12 g of a graft polymer (P-21). The graft ratio was 0.6% by mass.

### [Examples A to C]

In Example A, 100% by mass of the graft polymer obtained in Synthesis Example 1 was used as an adhesive composition.

In Example B, 100% by mass of the graft polymer obtained in Synthesis Example 18 was used as an adhesive composition.

In addition, in Example C, 100% by mass of the graft polymer obtained in Synthesis Example 20 was used as an adhesive composition.

### <Amount of carbodiimide group>

The amounts (mmol) of the carbodiimide group per 100 g of the adhesive compositions obtained in Examples A to C were calculated from the following formula (I). The results are shown in Table 1 as the amount of the carbodiimide group (mmol/100 g). (Graft ratio [% by mass] of graft-modified product used in adhesive composition/molecular weight of carbodiimide monomer used for synthesis of graft-modified product) × 100 × 100/10 ·· (I)

### <Density>

The densities (g/cm³) of the adhesive compositions obtained in Examples A to C were measured according to JIS K 7210. Table 1 shows the results.

### <Adhesion evaluation>

### • Production of press sheet

Each of the adhesive compositions obtained in Examples A to C was press-molded at a temperature of 180°C, a pressure of 4 MPa, a preheating time of 5 minutes, and a pressing time of 3 minutes, and then quenched in a press-molding machine set at 20°C to produce a press sheet having a thickness of 500 um, a length of 80 mm, and a width of 80 mm.

### • Production of polyethyleneterephthalate laminate

A polyethyleneterephthalate (PET) sheet having a thickness of 50 um, a length of 80 mm, and a width of 80 mm (product name: Lumirror T60, manufactured by Toray Industries, Inc.) was used as the base material layer.

The PET sheet, the press sheet, and the PET sheet were laminated in this order, the laminated sheets were sandwiched between Teflon (R) sheets, and heat sealing was performed for 5 seconds, 10 seconds, or 15 seconds using a heat sealer in which the temperature of the (lower) press plate was set to 230°C and the temperature of the (upper) press plate was set to 230°C to produce a three-layered polyethyleneterephthalate laminate.

### • Peeling test

For the produced polyethyleneterephthalate laminate, the upper PET sheet (the PET sheet on the press plate (upper) side) and the press sheet were T-peeled from each other under the conditions of a peeling atmosphere temperature of 23°C, a peeling rate of 300 mm/min, and a peel width of 15 mm, and the peel strength between the PET sheet and the press sheet was measured. Table 1 shows the results.

The case where the PET sheet itself breaks off rather than the interface between the PET sheet and the press sheet due to strong adhesive strength is indicated as "PET resin breakage".

**[Table 1]**

| | Adhesive composition | | | Laminate | |
|---|---|---|---|---|---|
| | Graft polymer | Amount of carbodiimide group (mmol/100g) | Density (g/cm³) | Heat sealing time (s) | Peel strength (N/15mm) |
| Example A | P-1 | 11.9 | 0.907 | 5 | PET resin breakage |
| | | | | 10 | PET resin breakage |
| | | | | 15 | PET resin breakage |
| Example B | P-18 | 33.6 | 0.902 | 5 | PET resin breakage |
| | | | | 10 | PET resin breakage |
| | | | | 15 | PET resin breakage |
| Example C | P-20 | 16.7 | 0.892 | 5 | PET resin breakage |
| | | | | 10 | PET resin breakage |
| | | | | 15 | PET resin breakage |

### <MFR>

The MFRs (g/10 minutes) of the adhesive compositions obtained in the following examples and comparative examples were measured at 190°C and 2.16 kg load according to JIS K 7210.

### <Amount of carbodiimide group>

The amounts (mmol) of the carbodiimide group per 100 g of the adhesive compositions obtained in the following examples and comparative examples were calculated from the following formula (I). The results are shown in Tables 2 to 4 as the amount of the carbodiimide group (mmol/100 g). (Graft ratio [% by mass] of graft-modified product used in adhesive composition/molecular weight of carbodiimide monomer used for synthesis of graft-modified product) × 100 × amount [% by mass] of graft-modified product used in adhesive composition/10 ·· (I)

### <Density>

The densities (g/cm³) of the adhesive compositions obtained in the following examples and comparative examples were measured according to JIS K 7210. Results are shown in Tables 2 to 4.

### [Example 1]

11 Parts by mass of the graft polymer (P-1) produced in Synthesis Example 1 and 89 parts by mass of LLDPE (the same polymer as the base polymer used in Synthesis Example 1) were kneaded using LABO PLASTOMILL under conditions of a temperature of 190°C, a screw speed of 60 rpm, and a kneading time of 10 minutes, thereby obtaining an adhesive composition C-1.

The obtained adhesive composition C-1 has an MFR (190°C, 2.16 kg load) of 2.7 g/10 minutes and a density of 0.903 g/cm³, and the amount of the carbodiimide group per 100 g of the composition was 1.3 mmol.

### [Example 2]

An adhesive composition C-2 was obtained in the same manner as in Example 1, except that 12 parts by mass of the graft polymer (P-2) produced in Synthesis Example 2 and 88 parts by mass of polypropylene (the same polymer as the base polymer used in Synthesis Example 2) were used.

The obtained adhesive composition C-2 has an MFR (190°C, 2.16 kg load) of 0.6 g/10 minutes and a density of 0.893 g/cm³, and the amount of the carbodiimide group per 100 g of the composition was 0.8 mmol.

### [Example 3]

An adhesive composition C-3 was obtained in the same manner as in Example 1, except that 12 parts by mass of the graft polymer (P-3) produced in Synthesis Example 3 and 88 parts by mass of LLDPE (the same polymer as the base polymer used in Synthesis Example 1) were used.

The obtained adhesive composition C-3 has an MFR (190°C, 2.16 kg load) of 2.93 g/10 minutes and a density of 0.903 g/cm³, and the amount of the carbodiimide group per 100 g of the composition was 1.3 mmol.

### [Example 4]

An adhesive composition C-4 was obtained in the same manner as in Example 1, except that 10 parts by mass of the graft polymer (P-4) produced in Synthesis Example 4 and 90 parts by mass of LLDPE (the same polymer as the base polymer used in Synthesis Example 1) were used.

The obtained adhesive composition C-4 has an MFR (190°C, 2.16 kg load) of 3.1 g/10 minutes and a density of 0.902 g/cm³, and the amount of the carbodiimide group per 100 g of the composition was 1.3 mmol.

### [Example 5]

An adhesive composition C-5 was obtained in the same manner as in Example 1, except that 16 parts by mass of the graft polymer (P-5) produced in Synthesis Example 5 and 84 parts by mass of LLDPE (the same polymer as the base polymer used in Synthesis Example 1) were used.

The obtained adhesive composition C-5 has an MFR (190°C, 2.16 kg load) of 3.5 g/10 minutes and a density of 0.902 g/cm³, and the amount of the carbodiimide group per 100 g of the composition was 1.3 mmol.

### [Example 6]

An adhesive composition C-6 was obtained in the same manner as in Example 1, except that 17 parts by mass of the graft polymer (P-6) produced in Synthesis Example 6 and 83 parts by mass of LLDPE (the same polymer as the base polymer used in Synthesis Example 1) were used.

The obtained adhesive composition C-6 has an MFR (190°C, 2.16 kg load) of 2.73 g/10 minutes and a density of 0.907 g/cm³, and the amount of the carbodiimide group per 100 g of the composition was 1.3 mmol.

### [Example 7]

An adhesive composition C-7 was obtained in the same manner as in Example 1, except that 12 parts by mass of the graft polymer (P-7) produced in Synthesis Example 7 and 88 parts by mass of LLDPE (the same polymer as the base polymer used in Synthesis Example 1) were used.

The obtained adhesive composition C-7 has a density of 0.903 g/cm³, and the amount of the carbodiimide group per 100 g of the composition was 1.3 mmol.

### [Example 8]

An adhesive composition C-8 was obtained in the same manner as in Example 1, except that 21 parts by mass of the graft polymer (P-8) produced in Synthesis Example 8 and 79 parts by mass of LLDPE (the same polymer as the base polymer used in Synthesis Example 1) were used.

The obtained adhesive composition C-8 has a density of 0.904 g/cm³, and the amount of the carbodiimide group per 100 g of the composition was 1.3 mmol.

### [Example 9]

An adhesive composition C-9 was obtained in the same manner as in Example 1, except that 12 parts by mass of the graft polymer (P-9) produced in Synthesis Example 9 and 88 parts by mass of polypropylene (the same polymer as the base polymer used in Synthesis Example 2) were used.

The obtained adhesive composition C-9 has an MFR (190°C, 2.16 kg load) of 1.0 g/10 minutes and a density of 0.893 g/cm³, and the amount of the carbodiimide group per 100 g of the composition was 0.8 mmol.

### [Example 10]

An adhesive composition C-10 was obtained in the same manner as in Example 1, except that 14 parts by mass of the graft polymer (P-10) produced in Synthesis Example 10 and 86 parts by mass of polypropylene (the same polymer as the base polymer used in Synthesis Example 2) were used.

The obtained adhesive composition C-10 has an MFR (190°C, 2.16 kg load) of 1.8 g/10 minutes and a density of 0.892 g/cm³, and the amount of the carbodiimide group per 100 g of the composition was 0.8 mmol.

### [Example 11]

An adhesive composition C-11 was obtained in the same manner as in Example 1, except that 13 parts by mass of the graft polymer (P-11) produced in Synthesis Example 11 and 87 parts by mass of polypropylene (the same polymer as the base polymer used in Synthesis Example 2) were used.

The obtained adhesive composition C-11 has an MFR (190°C, 2.16 kg load) of 2.0 g/10 minutes and a density of 0.892 g/cm³, and the amount of the carbodiimide group per 100 g of the composition was 0.8 mmol.

### [Example 12]

An adhesive composition C-12 was obtained in the same manner as in Example 1, except that 13 parts by mass of the graft polymer (P-12) produced in Synthesis Example 12 and 87 parts by mass of polypropylene (the same polymer as the base polymer used in Synthesis Example 2) were used.

The obtained adhesive composition C-12 has a density of 0.893 g/cm³, and the amount of the carbodiimide group per 100 g of the composition was 0.8 mmol.

### [Example 13]

An adhesive composition C-13 was obtained in the same manner as in Example 1, except that 13 parts by mass of the graft polymer (P-13) produced in Synthesis Example 13 and 87 parts by mass of polypropylene (the same polymer as the base polymer used in Synthesis Example 2) were used.

The obtained adhesive composition C-13 has a density of 0.892 g/cm³, and the amount of the carbodiimide group per 100 g of the composition was 0.8 mmol.

### [Example 14]

An adhesive composition C-14 was obtained in the same manner as in Example 1, except that 15 parts by mass of the graft polymer (P-14) produced in Synthesis Example 14 and 85 parts by mass of LLDPE (the same polymer as the base polymer used in Synthesis Example 1) were used.

The obtained adhesive composition C-14 has a density of 0.903 g/cm³, and the amount of the carbodiimide group per 100 g of the composition was 1.3 mmol.

### [Example 15]

An adhesive composition C-15 was obtained in the same manner as in Example 1, except that 9 parts by mass of the graft polymer (P-15) produced in Synthesis Example 15 and 91 parts by mass of polypropylene (the same polymer as the base polymer used in Synthesis Example 2) were used.

The obtained adhesive composition C-15 has a density of 0.892 g/cm³, and the amount of the carbodiimide group per 100 g of the composition was 0.8 mmol.

### [Example 16]

An adhesive composition C-16 was obtained in the same manner as in Example 1, except that 12 parts by mass of the graft polymer (P-19) produced in Synthesis Example 19 and 88 parts by mass of polypropylene (the same polymer as the base polymer used in Synthesis Example 2) were used.

The obtained adhesive composition C-16 has an MFR (190°C, 2.16 kg load) of 1.3 g/10 minutes and a density of 0.893 g/cm³, and the amount of the carbodiimide group per 100 g of the composition was 0.3 mmol.

### [Example 17]

An adhesive composition C-17 was obtained in the same manner as in Example 1, except that 12 parts by mass of the graft polymer (P-21) produced in Synthesis Example 21 and 88 parts by mass of polypropylene (the same polymer as the base polymer used in Synthesis Example 2) were used.

The obtained adhesive composition C-17 has an MFR (190°C, 2.16 kg load) of 1.6 g/10 minutes and a density of 0.893 g/cm³, and the amount of the carbodiimide group per 100 g of the composition was 0.3 mmol.

### [Example 18]

An adhesive composition C-18 was obtained in the same manner as in Example 1, except that 25 parts by mass of the graft polymer (P-1) produced in Synthesis Example 1 and 75 parts by mass of LLDPE (the same polymer as the base polymer used in Synthesis Example 1) were used.

The obtained adhesive composition C-18 has an MFR (190°C, 2.16 kg load) of 1.0 g/10 minutes and a density of 0.920 g/cm³, and the amount of the carbodiimide group per 100 g of the composition was 2.9 mmol.

### [Example 19]

An adhesive composition C-19 was obtained in the same manner as in Example 1, except that 50 parts by mass of the graft polymer (P-1) produced in Synthesis Example 1 and 50 parts by mass of LLDPE (the same polymer as the base polymer used in Synthesis Example 1) were used.

The obtained adhesive composition C-19 has an MFR (190°C, 2.16 kg load) of 0.2 g/10 minutes and a density of 0.918 g/cm³, and the amount of the carbodiimide group per 100 g of the composition was 5.9 mmol.

### [Comparative Example 1]

An adhesive composition CC-1 was obtained in the same manner as in Example 1, except that 10 parts by mass of the graft polymer (P-16) produced in Synthesis Example 16 and 90 parts by mass of LLDPE (the same polymer as the base polymer used in Synthesis Example 1) were used.

The obtained adhesive composition CC-1 has an MFR (190°C, 2.16 kg load) of 3.2 g/10 minutes and a density of 0.902 g/cm³, the amount of an epoxy group per 100 g of the composition was 1.3 mmol, and graft-modified products by a carbodiimide monomer were not contained.

### [Comparative Example 2]

Lotader (manufactured by Arkema; density: 0.940 g/cm³, amount of epoxy group per 100 g of composition: 56 mmol, graft-modified products by a carbodiimide monomer were not contained) was used as an adhesive composition CC-2.

### [Comparative Example 3]

An adhesive composition CC-3 was obtained in the same manner as in Example 1, except that 12 parts by mass of the graft polymer (P-17) produced in Synthesis Example 17 and 88 parts by mass of polypropylene (the same polymer as the base polymer used in Synthesis Example 2) were used.

The obtained adhesive composition CC-3 has an MFR (190°C, 2.16 kg load) of 1.9 g/10 minutes and a density of 0.892 g/cm³, the amount of an epoxy group per 100 g of the composition was 0.8 mmol, and graft-modified products by a carbodiimide monomer were not contained.

### [Comparative Example 4]

An adhesive composition CC-4 was obtained in the same manner as in Example 1, except that LLDPE (the same polymer as the base polymer used in Synthesis Example 1) was set to 100 parts by mass.

The obtained adhesive composition CC-4 has an MFR (190°C, 2.16 kg load) of 3.7 g/10 minutes and a density of 0.919 g/cm³, and the amount of the carbodiimide group per 100 g of the composition was 0 mmol.

### [Comparative Example 5]

An adhesive composition CC-5 was obtained in the same manner as in Example 1, except that polypropylene (the same polymer as the base polymer used in Synthesis Example 2) was set to 100 parts by mass.

The obtained adhesive composition CC-5 has an MFR (190°C, 2.16 kg load) of 3.7 g/10 minutes and a density of 0.893 g/cm³, and the amount of the carbodiimide group per 100 g of the composition was 0 mmol.

### <Adhesion evaluation>

### • Production of press sheet

Each of the adhesive compositions obtained in Examples 1 to 19 and Comparative Examples 1 to 5 was press-molded at a temperature of 180°C, a pressure of 4 MPa, a preheating time of 5 minutes, and a pressing time of 3 minutes, and then quenched in a press-molding machine set at 20°C to produce a press sheet having a thickness of 500 um, a length of 80 mm, and a width of 80 mm.

### • Production of polyethyleneterephthalate laminate

A polyethyleneterephthalate (PET) sheet having a thickness of 50 um, a length of 80 mm, and a width of 80 mm (product name: Lumirror T60, manufactured by Toray Industries, Inc.) was used as the base material layer.

The PET sheet, the press sheet, and the PET sheet were laminated in this order, the laminated sheets were sandwiched between Teflon (R) sheets, and heat sealing was performed for 3 seconds using a heat sealer in which the temperature of the (lower) press plate was set to 200°C and the temperature of the (upper) press plate was set to 200°C or 230°C to produce a three-layered polyethyleneterephthalate laminate.

### • Peeling test

For the produced polyethyleneterephthalate laminate, the upper PET sheet (the PET sheet on the press plate (upper) side) and the press sheet were T-peeled from each other under the conditions of a peeling atmosphere temperature of 23°C, a peeling rate of 300 mm/min, and a peel width of 15 mm, and the peel strength between the PET sheet and the press sheet was measured. Results are shown in Tables 2 and 3.

The case where the PET sheet itself breaks off rather than the interface between the PET sheet and the press sheet due to strong adhesive strength is indicated as "PET resin breakage".

Table 2 relates to ethylene adhesive compositions, and Table 3 relates to propylene adhesive compositions.

**[Table 2]**

| | Adhesive composition | | | Laminate | |
|---|---|---|---|---|---|
| | Graft polymer | Amount of carbodiimide group (mmol/100g) | Density (g/cm³) | Heat Sealing Temperature (°C) | Peel strength (N/15mm) |
| Example 1 | P-1 | 1.3 | 0.903 | 200 | 4.3 |
| | | | | 230 | PET resin breakage |
| Example 3 | P-3 | 1.3 | 0.903 | 200 | 4.9 |
| | | | | 230 | 6.4 |
| Example 4 | P-4 | 1.3 | 0.902 | 200 | 6.4 |
| | | | | 230 | 9.4 |
| Example 5 | P-5 | 1.3 | 0.902 | 200 | 7.6 |
| | | | | 230 | PET resin breakage |
| Example 6 | P-6 | 1.3 | 0.907 | 200 | PET resin breakage |
| | | | | 230 | PET resin breakage |
| Example 7 | P-7 | 1.3 | 0.903 | 200 | 3.7 |
| | | | | 230 | 5.3 |
| Example 8 | P-8 | 1.3 | 0.904 | 200 | 5.8 |
| | | | | 230 | 6.3 |
| Example 14 | P-14 | 1.3 | 0.903 | 200 | 1.9 |
| | | | | 230 | 7.8 |
| Example 18 | P-1 | 2.9 | 0.920 | 200 | PET resin breakage |
| | | | | 230 | PET resin breakage |
| Example 19 | P-1 | 5.9 | 0.918 | 200 | PET resin breakage |
| | | | | 230 | PET resin breakage |
| Comparative Example 1 | P-16 | 0 | 0.902 | 200 | 0.9 |
| | | | | 230 | 2.1 |
| Comparative Example 2 | Lotader | 0 | 0.940 | 200 | 0.1 |
| | | | | 230 | 0.1 |
| Comparative Example 4 | LLDPE | 0 | 0.919 | 200 | 0.0 |
| | | | | 230 | 0.0 |

**[Table 3]**

| | Adhesive composition | | | Laminate | |
|---|---|---|---|---|---|
| | Graft polymer | Amount of carbodiimide group (mmol/100g) | Density (g/cm³) | Heat Sealing Temperature (°C) | Peel strength (N/15mm) |
| Example 2 | P-2 | 0.8 | 0.893 | 200 | 3.6 |
| | | | | 230 | PET resin breakage |
| Example 9 | P-9 | 0.8 | 0.893 | 200 | 0.8 |
| | | | | 230 | 0.6 |
| Example 10 | P-10 | 0.8 | 0.892 | 200 | 1.2 |
| | | | | 230 | 6.8 |
| Example 11 | P-11 | 0.8 | 0.892 | 200 | 9.5 |
| | | | | 230 | PET resin breakage |
| Example 12 | P-12 | 0.8 | 0.893 | 200 | 0.2 |
| | | | | 230 | 0.9 |
| Example 13 | P-13 | 0.8 | 0.892 | 200 | 0.3 |
| | | | | 230 | 0.6 |
| Example 15 | P-15 | 0.8 | 0.892 | 200 | 1.9 |
| | | | | 230 | 7.8 |
| Example 16 | P-19 | 0.3 | 0.893 | 200 | 0.9 |
| | | | | 230 | 2.0 |
| Example 17 | P-21 | 0.3 | 0.893 | 200 | 2.6 |
| | | | | 230 | 8.6 |
| Comparative Example 3 | P-17 | 0 | 0.892 | 200 | 0.1 |
| | | | | 230 | 0.2 |
| Comparative Example 5 | Polypropylene | 0 | 0.893 | 200 | 0.0 |
| | | | | 230 | 0.0 |

### <Adhesion evaluation>

### • Production of press sheet

Each of the adhesive compositions obtained in Examples 2, 5, and 11 and Comparative Examples 2 and 3 was press-molded at a temperature of 180°C, a pressure of 4 MPa, a preheating time of 5 minutes, and a pressing time of 3 minutes, and then quenched in a press-molding machine set at 20°C to produce a press sheet having a thickness of 500 µm, a length of 80 mm, and a width of 80 mm.

### • Production of biodegradable polymer laminate

A polylactic acid (PLA) sheet having a thickness of 100 um, a length of 80 mm, and a width of 80 mm (product name: Ingeo, manufactured by NatureWorks LLC, pyrolysis temperature Td measured by thermogravimetric analysis (TGA): 262°C) was used as the base material layer.

The PLA sheet, the press sheet, and the PLA sheet were laminated in this order, the laminated sheets were sandwiched between Teflon (R) sheets, and heat sealing was performed for 3 seconds using a heat sealer in which the temperature of the upper and lower press plates were set to 170°C or 230°C to produce a three-layered biodegradable polymer laminate.

### • Peeling test

For the produced biodegradable polymer laminate, the upper PLA sheet (the PLA sheet on the press plate (upper) side) and the press sheet were T-peeled from each other under the conditions of a peeling atmosphere temperature of 23°C, a peeling rate of 300 mm/min, and a peel width of 15 mm, and the peel strength between the PLA sheet and the press sheet was measured. Table 4 shows the results.

The case where the PLA sheet itself breaks off rather than the interface between the PLA sheet and the press sheet due to strong adhesive strength is indicated as "resin breakage".

**[Table 4]**

| | Adhesive composition | | | Laminate | |
|---|---|---|---|---|---|
| | Graft polymer | Amount of carbodiimide group (mmol/100g) | Density (g/cm³) | Heat Sealing Temperature (°C) | Peel strength (N/15mm) |
| Example 2 | P-2 | 0.8 | 0.893 | 170 | 167 |
| | | | | 230 | Resin breakage |
| Example 5 | P-5 | 1.3 | 0.902 | 170 | 2.84 |
| | | | | 230 | Resin breakage |
| Example 11 | P-11 | 0.8 | 0.892 | 170 | 2.27 |
| | | | | 230 | Resin breakage |
| Comparative Example 2 | Lotader | 0 | 0.940 | 170 | 0.1 |
| | | | | 230 | 0.1 |
| Comparative Example 3 | P-17 | 0 | 0.892 | 170 | 0 |
| | | | | 230 | 0.01 |

## Claims

1. A laminate comprising: a layer (A) comprising polyethylene terephthalate or a biodegradable polymer; and an adhesive layer (B) comprising an adhesive composition,
wherein at least a part of the adhesive layer (B) is in contact with the layer (A), and
the adhesive composition satisfies the following requirements (i) to (iii):
(i) a graft-modified product of at least one base polymer selected from polyolefins by a carbodiimide monomer having a carbodiimide group and a polymerizable double bond is contained;
(ii) 0.1 to 50 mmol of the carbodiimide group is contained per 100 g of the adhesive composition; and
(iii) a density is 0.870 to 0.940 g/cm³.

2. The laminate according to claim 1, wherein the carbodiimide monomer is at least one monomer selected from the group consisting of a compound represented by the following formula (1) and a compound represented by the following formula (2), 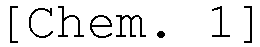 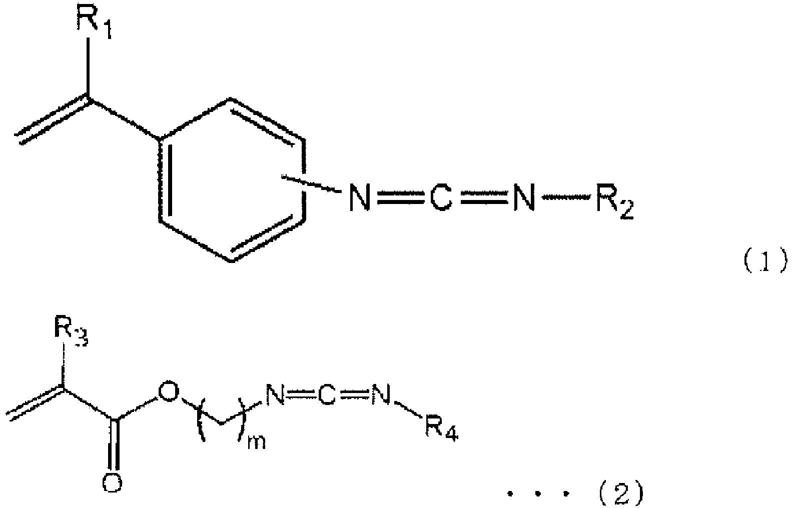 wherein in the formula (1), R₁ is a hydrogen atom or a methyl group, and R₂ is an alkyl group or aryl group optionally having a substituent, and
in the formula (2), R₃ is a hydrogen atom or a methyl group, R₄ is an alkyl group or aryl group optionally having a substituent, and m is an integer of 2 or more.

3. The laminate according to claim 1 or 2, wherein the layer (A) consists of polyethylene terephthalate.

4. The laminate according to claim 1 or 2, wherein the layer (A) comprises polylactic acid.

5. The laminate according to claim 1 or 2, wherein the layer (A) consists of a biodegradable polymer.

6. The laminate according to claim 1 or 2, wherein the layer (A) consists of polylactic acid.

7. The laminate according to claim 1 or 2 obtained by laminate molding, co-extrusion molding, blow molding, or co-injection molding.

8. A method for producing a laminate,
wherein the laminate is a laminate having a layer (A) comprising polyethylene terephthalate or a biodegradable polymer and an adhesive layer (B) comprising an adhesive composition, at least a part of the adhesive layer (B) is in contact with the layer (A),
the production method comprises a step 1 of performing co-extrusion molding, laminate molding, blow molding, or co-injection molding on a resin composition comprising polyethylene terephthalate or a biodegradable polymer and the adhesive composition, and
the adhesive composition satisfies the following requirements (i) to (iii):
(i) a graft-modified product of at least one base polymer selected from polyolefins by a carbodiimide monomer having a carbodiimide group and a polymerizable double bond is contained;
(ii) 0.1 to 50 mmol of the carbodiimide group is contained per 100 g of the adhesive composition; and
(iii) a density is 0.870 to 0.940 g/cm³.

9. The method for producing a laminate according to claim 8, wherein, when the layer (A) is a layer comprising a biodegradable polymer,
the step 1 is performed at a temperature that is lower than a pyrolysis temperature of the biodegradable polymer.

10. The method for producing a laminate according to claim 8 or 9, wherein the carbodiimide monomer is at least one monomer selected from the group consisting of a compound represented by the following formula (1) and a compound represented by the following formula (2), 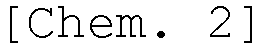 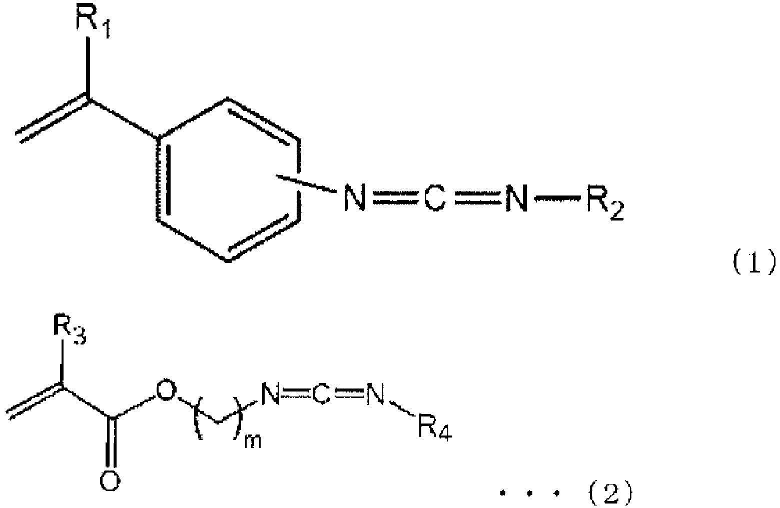 wherein in the formula (1), R₁ is a hydrogen atom or a methyl group, and R₂ is an alkyl group or aryl group optionally having a substituent, and
in the formula (2), R₃ is a hydrogen atom or a methyl group, R₄ is an alkyl group or aryl group optionally having a substituent, and m is an integer of 2 or more.

11. An adhesive composition satisfying the following requirements (i) to (iii):
(i) a graft-modified product of at least one base polymer selected from polyolefins by a carbodiimide monomer having a carbodiimide group and a polymerizable double bond is contained;
(ii) 0.1 to 50 mmol of the carbodiimide group is contained per 100 g of the adhesive composition; and
(iii) a density is 0.870 to 0.940 g/cm³.

12. The adhesive composition according to claim 11, wherein the carbodiimide monomer is at least one monomer selected from the group consisting of a compound represented by the following formula (1) and a compound represented by the following formula (2), 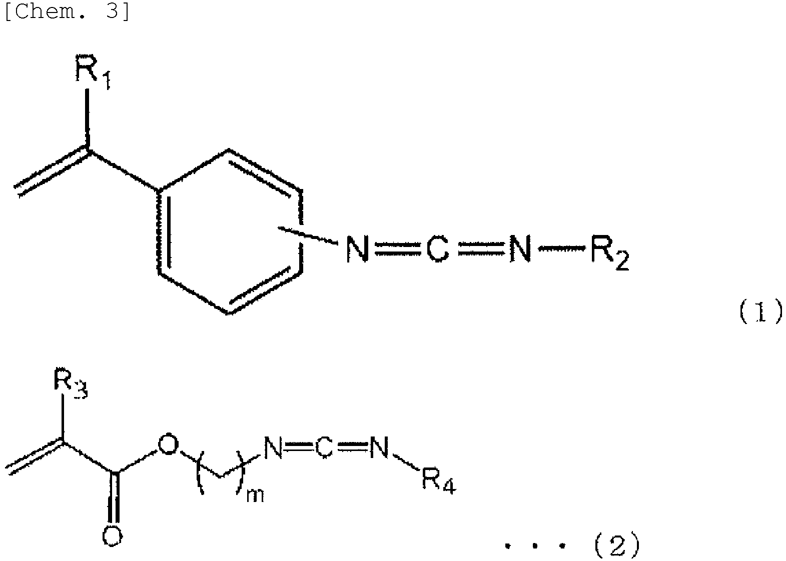 wherein in the formula (1), R₁ is a hydrogen atom or a methyl group, and R₂ is an alkyl group or aryl group optionally having a substituent, and
in the formula (2), R₃ is a hydrogen atom or a methyl group, R₄ is an alkyl group or aryl group optionally having a substituent, and m is an integer of 2 or more.
